# EUROPÄISCHE PATENTANMELDUNG

(11) **EP 4 643 638 A2**
(43) Veröffentlichungstag der Anmeldung: **05.11.2025**
(21) Anmeldenummer: 25000046.0
(22) Anmeldetag: 04.05.2025
(51) Int. Cl.: A01K 13/00, A01K 27/00

(54) **SCHUTZKLEIDUNG FÜR HUND**

(30) Priorität: 04.05.2024 DE 202024000871 U
(71) Anmelder: LAHNER Group GmbH, 85399 Hallbergmoos (DE)
(72) Erfinder: Lahner, Florian, 90763 Fürth (DE)
(74) Vertreter: Becker-Freyseng, Christoph

(57) **Zusammenfassung**

Die Anmeldung betrifft die technische Ausgestaltung von Schutzkleidung (1) für Hunde, insbesondere zum Einsatz in anspruchsvollen oder potenziell gefährlichen Umgebungen wie bei Polizei, Militär, Rettungsdienst oder Jagd. Die Schutzkleidung weist mehrere Segmente (11, 12, 13, 14) auf, die beweglich miteinander verbunden sind und im angelegten Zustand den Rumpfbereich des Hunds bedecken. Ein Hauptsegment (11) umschließt dabei Thorax und Abdomen zumindest im Wesentlichen röhrenförmig. Die beweglichen Verbindungen sind entlang natürlicher Biege- und Beugelinien des Hunds angeordnet, sodass physiologische Bewegungen unterstützt werden. Die Schutzkleidung kann Schutzmaterial enthalten und mit einem Gurtsystem (70) am Hund befestigt werden.

## Beschreibung

Die Anmeldung betrifft eine Schutzkleidung für ein vierbeiniges Tier, insbesondere eine Hundeschutzweste. Sie betrifft auch Vorrichtungen, Verfahren und Verwendungen, die in technischer Beziehung dazu stehen, wie insbesondere ein Gurtsystem, ein Frontschutz, ein Nachrüstsatz, ein Herstellungsverfahren und eine Verwendung für die Schutzkleidung. Die Anmeldung liegt auf dem Gebiet des Schutzes von Tieren im Rahmen der Tierhaltung sowie der Nutzung von Tieren, insbesondere von Hunden zu Schutzzwecken wie von Dienst- und Einsatzhunden oder auch von Jagdhunden.

Hunde sollen im Einsatz geschützt werden gegen verschiedene Arten von Gefahren wie etwa vor wehrhaftem Wild - beispielsweise Schwarzwild -, Stich- Schlag-, Schnitt- oder Schussverletzungen sowie Verletzungen durch scharfe oder spitze Gegenstände wie Dornen, Stacheldraht oder abgebrochene Äste. Zum Schutz wird Hunden üblicherweise eine Schutzkleidung, insbesondere eine Schutzweste angelegt, welche bestimmte, etwa besonders gefährdete Bereiche bzw. Bereiche, bei welchen eine Verletzung eine besonders hohe Gefahr für den Hund darstellt, bedeckt. Derartige Schutzwesten weisen bei den bedeckten Bereichen Schutzmaterial auf, welches üblicherweise in eine textile Hülle einer solchen Schutzweste integriert ist. Die textile Hülle und bei einigen Varianten auch das Schutzmaterial sind biegsam und durch die Anatomie des Hundes ergibt sich im angelegten Zustand eine röhrenförmige Gestalt der Schutzweste. Oft schränken derartige Schutzwesten die Leistungsfähigkeit des Hunds - etwa aufgrund ihres Gewichts - ein und/oder haben eine gegenüber anderen Schutzwesten reduzierte Schutzfläche, d.h. decken insbesondere weniger Bereiche des Hunds ab, wodurch sich zwar etwa das Gewicht reduzieren lässt, aber auch die Schutzwirkung abnimmt.

Es besteht Bedarf eine Schutzkleidung für einen Hund zu verbessern und hierbei insbesondere die Leistungsfähigkeit des Hunds relativ zu einem Hund ohne Schutzweste zumindest im Wesentlichen zu erhalten und eine Schutzwirkung des Hunds vor Verletzungen, etwa gegenüber Schutzwesten mit reduzierter Schutzfläche, zu steigern.

Verschiedene in der vorliegenden Offenbarung beschriebene Techniken erfüllen diesen Bedarf jeweils durch eine Schutzkleidung für einen Hund, ein Gurtsystem für eine Schutzkleidung, einen Frontschutz für eine Schutzkleidung, einen Nachrüstsatz für eine Schutzkleidung, ein Verfahren zur Herstellung einer Schutzkleidung sowie eine Verwendung einer Schutzkleidung, insbesondere zum Schutz eines Hunds im Einsatz, jeweils gemäß der Lehre eines der unabhängigen Ansprüche. Ausführungsformen, Weiterbildungen und Varianten der vorliegenden Erfindung sind insbesondere Gegenstand der abhängigen Ansprüche.

Ein erster Aspekt der Erfindung betrifft eine Schutzkleidung für einen Hund. Die Schutzkleidung weist mehrere Segmente zum Schutz des Rumpfbereichs des Hunds mittels Schutzmaterials auf. Dabei sind die Segmente zumindest paarweise beweglich miteinander verbunden. Weiterhin sind die Segmente ausgebildet, in einem angelegten Zustand der Schutzweste je einen Teil des Rumpfbereichs zwischen den Vorderläufen und den Hinterläufen des Hundes zu bedecken. Dabei ist eines der Segmente - welches auch als Hauptsegment bezeichnet wird - ausgebildet, im angelegten Zustand einen Bereich beim Thorax und Abdomen des Hunds röhrenförmig zumindest im Wesentlichen zu umschließen.

Ein Vorteil des Umschließens des Bereichs beim Thorax und Abdomen mit dem Hauptsegment kann insbesondere darin liegen, dass hiermit ein Bereich beim Hund mit Schutzmaterial bedeckt und somit geschützt wird, welcher einerseits ein hohes Risiko für das Auftreten von Verletzungen hat und bei welchem zugleich eine Verletzung besonders bedrohlich für die Gesundheit oder das Leben des Hunds ist.

Ein weiterer Vorteil dieses Umschließens zusammen mit den mehreren beweglich miteinander verbundenen Segmenten kann insbesondere darin liegen, dass die Segmente neben dem Hauptsegment, weitere Bereiche des Hunds bedecken und insbesondere umschließen können und somit weitere Bereiche schützen.

Bei üblichen Schutzkleidungen für Hunde, insbesondere üblichen Hundeschutzwesten sind deren textile Hülle und bei manchen auch das Schutzmaterial zwar um den Hund formbar und diese lassen sich insbesondere so dem Hund anlegen. Hierbei hat sich für den Erfinder die überraschende Erkenntnis ergeben, dass übliche Schutzkleidungen für Hunde im angelegten Zustand aufgrund der röhrenförmigen oder allgemeiner gebogenen Gestalt bereits in einer Richtung gebogen sind, aber nicht oder nur gering dehnbar sind, somit nicht mehr entlang der natürlichen Biege- und Beugelinien biegsam sind, also im angelegten Zustand insbesondere eine hohe Steifheit aufweisen, was die Bewegungsmöglichkeiten des Hunds und damit seine Leistungsfähigkeit einschränkt.

Da vorteilhaft die mehreren Segmente der Schutzkleidung gemäß dem ersten Aspekt beweglich miteinander verbunden sind, ist die Schutzkleidung trotz Schutzmaterial an mehreren und/oder großen Bereichen des Hunds - insbesondere auch bei Formung um den Hund im angelegten Zustand - nicht steif, sondern ermöglicht eine Bewegung der Bereiche relativ zueinander und somit des Hunds. Auf diese vorteilhafte Weise bleibt die Leistungsfähigkeit des Hunds - zumindest im Wesentlichen - erhalten und es können - im Vergleich zu Schutzwesten mit reduzierter Schutzfläche - mehr bzw. größere Bereiche des Hunds geschützt werden. So kann etwa ein Hund, auch wenn er die Schutzkleidung trägt, seinen Kopf zum Schnüffeln senken, zum Blicken oder Drohen anheben, zum Springen seine Hinterläufe nach vorne strecken sowie sein Becken kippen und/oder sich seitlich biegen sowie eine Biegung des Rumpfes entlang der natürlichen anatomischen und physiologischen Gegebenheiten ausführen, etwa für einen schnellen Richtungswechsel oder ein Fassen eines Gegenstands oder einer Person, welcher/welche sich seitlich zu ihm befindet.

Auch kann ein Vorteil des Umschließens mittels dem Hauptsegment zusammen mit den mehreren Segmenten darin liegen, dass das Hauptsegment einen stabilen Sitz der Schutzkleidung ermöglicht, wobei auch die anderen der mehreren Segmente im angelegten Zustand der Schutzkleidung aufgrund des beweglichen Verbindens zumindest im Wesentlichen an durch das Hauptsegment bestimmten Bereichen des Hunds angeordnet sind.

Unter einem "angelegtem Zustand" ist im Sinne der Offenbarung zumindest ein Zustand der Schutzkleidung zu verstehen, in welchem der Hund die Schutzkleidung trägt.Unter einer "Innenseite" der Schutzkleidung im Sinne der Offenbarung ist zumindest jene Seite der Schutzkleidung zu verstehen, welche dabei in Richtung des Hunds weist und zumindest teilweise an diesem anliegt, und entsprechend unter "Außenseite" jene, welche vom Hund weg weist, also insbesondere außen ist. Umgekehrt ist unter einem "nicht-angelegtem Zustand" im Sinne der Offenbarung zumindest ein Zustand der Schutzkleidung zu verstehen, in welchem der Hund die Schutzkleidung nicht trägt. In einigen Varianten der Schutzkleidung kann die Schutzkleidung im angelegten Zustand zudem geschlossen, also in einem "angelegt, geschlossenem Zustand" sein und umgekehrt im "nicht-angelegtem Zustand" zudem geöffnet, also ein einem "nicht-angelegt, geöffnetem Zustand" sein.

Unter "zumindest im Wesentlichen röhrenförmig umschließen" ist im Sinne der Offenbarung zumindest zu verstehen, dass ein umschlossener Bereich größtenteils durch das Umschließen bedeckt wird, insbesondere bzgl. der Fläche des Bereichs zu wenigstens 50%, vorzugsweise wenigstens 70% und bzgl. Schutzwirkung noch bevorzugter wenigstens 90%. Dabei versteht es sich, dass ein Schutz durch das Schutzmaterial verbessert wird, wenn eine größere Fläche des Bereichs bedeckt wird. Umgekehrt kann eine kleine Fläche eine bessere Beweglichkeit und/oder ein geringeres Gewicht ermöglichen oder auch den Aufbau der Schutzkleidung und/ oder das Anlegen der Schutzkleidung vereinfachen. In einigen Varianten der Schutzkleidung kann eines der mehreren Segmente, welches im angelegtem Zustand einen Bereich zumindest im Wesentlichen umschließt, etwa das Hauptsegment, röhrenförmig, insbesondere konusförmig ausgebildet sein, aber einen Schlitz in Längsrichtung aufweisen, welches etwa mittels einem oder mehreren Gurtbändern geschlossen wird, d.h. insbesondere Enden des Segments auf beiden Seiten des Schlitzes mittels der Gurtbänder verbunden werden, und/oder mittels elastischem Material im Schlitz verbunden wird. Bei entsprechender Größe des Schlitzes kann ein solches Segment also auch C-förmig oder U-förmig sein. Umgekehrt kann das Segment den Bereich auch zu 100% umschließen, also im angelegten Zustand der Schutzkleidung vollständig geschlossen sein - demnach insbesondere nicht nur "im Wesentlichen", sondern vollständig röhrenförmig; auch hier kann im angelegtem Zustand und entsprechend der Anatomie des Hunds das Segment zylinderförmig, konusförmig oder trichterförmig ausgebildet sein.

In einigen Ausführungsformen der Schutzkleidung ist ein weiteres der mehreren Segmente - welches auch als Schultersegment bezeichnet wird - ausgebildet, einen Abschnitt des Rumpfbereichs zwischen den Vorderläufen des Hunds und dem Hauptsegment U-förmig zu bedecken bzw. röhrenförmig zu umschließen. Auf diese vorteilhafte Weise lässt sich ein Schutz dieses Abschnitts des Rumpfbereichs erzielen, wobei dieser aufgrund der beweglichen Verbindung zwischen dem Hauptsegment und dem Schultersegment beweglich relativ zum Bereich beim Thorax und Abdomen bleibt, der Hund also dort insbesondere nicht oder kaum in seinen Bewegungsmöglichkeiten eingeschränkt wird.

In einigen Ausführungsformen der Schutzkleidung ist ein weiteres der mehreren Segmente - welches auch als Lendensegment bezeichnet wird - ausgebildet, einen Abschnitt des Rumpfbereichs von den Hinterläufen des Hunds zu dem Hauptsegment U-förmig zu bedecken bzw. röhrenförmig zu umschließen. Auf diese vorteilhafte Weise lässt sich ein Schutz dieses Abschnitts des Rumpfbereichs erzielen, wobei dieser aufgrund der beweglichen Verbindung zwischen dem Hauptsegment und dem Lendensegment beweglich relativ zum Bereich beim Thorax und Abdomen bleibt, der Hund also dort insbesondere nicht oder kaum in seinen Bewegungsmöglichkeiten eingeschränkt wird.

Bei einigen Ausführungsformen der Schutzkleidung mit einem Schultersegment ist ein weiteres der mehreren Segmente - welches auch als Brustsegment bezeichnet wird - ausgebildet, einen Abschnitt ausgehend vom Schultersegment über die vordere Brust des Hunds und unterhalb des Halses des Hunds zwischen den Vorderläufen entlang der Brust zum Hauptsegment Y-förmig zu bedecken und so das Schultersegment und das Hauptsegment zu verbinden. Auf diese vorteilhafte Weise lässt sich die vordere Brust schützen und die Schutzkleidung am Hund befestigen, insbesondere ein Verrutschen der Schutzkleidung nach hinten in Richtung des Schwanzes des Hunds verhindern. Alternativ kann in einigen Ausführungsformungen, insbesondere solche ohne Schultersegment, ein Brustsegment der Schutzkleidung ausgebildet sein, einen Abschnitt ausgehend vom Hauptsegment über die vordere Brust des Hunds und unterhalb des Halses des Hunds zwischen den Vorderläufen entlang der Brust zum Hauptsegment Y-förmig zu bedecken.

In einigen Ausführungsformen weist die Schutzkleidung zwischen einigen oder allen der mehreren Segmente jeweils einen Verbindungsabschnitt, insbesondere aus textilem Material, zum beweglichen Verbinden von je zumindest zwei der Segmente auf. Dabei verläuft der jeweilige Verbindungsabschnitt im angelegten Zustand entlang einer natürlichen Biegelinie oder einer natürlichen Beugelinie des Hunds oder einer Kombination aus Biege- und Beugelinie. In einigen Varianten sind je zwei der Segmente paarweise mittels genau einem Verbindungsabschnitt entlang einer natürlichen Biege- und Beugelinie verbunden. In einigen alternativen Varianten sind je zwei der Segmente paarweise mittels einem oder mehreren Verbindungsabschnitten verbunden, wobei einer dieser Verbindungsabschnitte entweder entlang eine Biegelinie oder entlang einer Beugelinie verläuft und bei mehreren Verbindungsabschnitten ein anderer der Verbindungsabschnitte entsprechend entlang der jeweils anderen Beuge- bzw. Biegelinie verläuft.

Ein Vorteil des Verlaufens des jeweiligen Verbindungsabschnitts entlang einer natürlichen Biege- und/oder Beugelinie kann insbesondere darin liegen, dass die Segmente dort beweglich miteinander verbunden sind, wo aufgrund der Anatomie des Hunds im Wesentlichen eine Bewegung des Hunds erfolgt, wo also Bewegungsmöglichkeiten für den Hund erforderlich sind, um seine Leistungsfähigkeit zu erhalten. Der Hund kann sich somit entsprechend seines natürlichem Bewegungsablaufs sowohl beugen als auch biegen, ohne - zumindest im Wesentlichen - durch die Schutzkleidung eingeschränkt zu sein. Dabei erhöht ein Verbinden sowohl entlang der Biege- als auch der Beugelinie die Robustheit der Schutzkleidung, reduziert etwaige Öffnungen und steigert so die Schutzwirkung. Umgekehrt lässt sich durch ein nur teilweises Verbinden, also insbesondere nur entlang einer Biegelinie oder einer Beugelinie die Beweglichkeit noch weiter steigern. Durch gesonderte Verbindungsabschnitte für Biege- und Beugelinie lassen sich diese an die jeweiligen Anforderungen, etwa besonders gute Biegsamkeit für bessere Beweglichkeit oder besonders gute Festigkeit für gesteigerten Schutz, anpassen.

Unter eine "natürlichen Biegelinie" ist im Sinne der Offenbarung zumindest eine Linie oder Achse zu verstehen, um welche ein Hund seine Schulter an sein Becken oder seine Hüfte annähern kann, also typischerweise wenn ein Hund sich nach links oder rechts wendet. Solche Bewegungen treten insbesondere beim seitlichen Wenden oder bei schnellen Richtungswechseln auf, insbesondere um seine Schulterpartie in Richtung seines Beckens oder seiner Hüfte zu bewegen.

Unter einer "natürlichen Beugelinie" ist im Sinne der Offenbarung zumindest eine Linie oder Achse zu verstehen, um welche ein Hund seine Wirbelsäule überstreckt - also etwa beim Aufrichten seines Kopfes nach oben - oder einrollt - also etwa beim Zusammenkauern nach bauchwärts oder beim Schnüffeln.

Dabei versteht es sich, dass eine solche Linie oder Achse gedacht / imaginär sein kann, also insbesondere keine physische Struktur des Hundekörpers sein muss, sondern sich aus seiner Physiologie ergibt.

Unter einer "beweglichen Verbindung" und/oder "beweglich miteinander verbunden" ist im Sinne der Offenbarung zumindest eine Verbindung von zwei Segmenten zu verstehen, welche eine relative Rotation der Segmente gegeneinander erlaubt, insbesondere eine Biegung und/ oder Beugung entlang einer natürlichen Biege- und/oder Beugelinie des Hundes. Hierbei wird ermöglicht, dass sich der Abstand der Segmente im Bereich der Verbindung nur geringfügig verändert und insbesondere nicht wesentlich vergrößert, sodass die strukturelle Integrität der Schutzkleidung erhalten bleibt. Die bewegliche Verbindung kann insbesondere mittels eines oder mehrerer Verbindungsabschnitte ausgeführt werden, welche die Segmente aneinander anordnen und deren relative Bewegung ermöglichen. Ein Verbindungsabschnitt kann eine Zugfestigkeit aufweisen, die jener der Segmente entspricht. Auch kann die Biege- und/oder Beugesteifigkeit des Verbindungsabschnitts kleiner als diejenige eines benachbarten Segments oder beider benachbarter Segmente sein, etwa weniger als 50 %, insbesondere weniger als 20 %, insbesondere weniger als 4,5% relativ zur Steifigkeit des Segments bzw. der Segmente. Dadurch erfolgt bei typischen Bewegungen eines Hundes eine Verformung der Schutzkleidung insbesondere durch Rotation, d.h. insbesondere durch Biegung und/oder Beugung des Verbindungsabschnitts sowie etwaig auch durch eine Dehnung oder Stauchung desselben, während das bzw. die benachbarten Segmente sich im Vergleich dazu zumindest im Wesentlichen nicht verformen.

Bei einigen Ausführungsformen, bei welchen die Schutzkleidung je einen Verbindungsabschnitt zum beweglichen Verbinden von je zumindest zwei der mehreren Segmente aufweist, weist die Schutzkleidung bei dem jeweiligen Verbindungsabschnitt zusätzliches in die Schutzweste eingearbeitetes Schutzmaterial auf und/oder weist eine oder mehrere innenliegende Taschen für Schutzpakete aus Schutzmaterial auf. Auf diese vorteilhafte Weise lassen sich Lücken bei der Bedeckung des Hunds mit Schutzmaterial vermeiden und so die Schutzwirkung weiter steigern.

Üblicherweise werden Richtungen und Lagen oder Positionen relativ zu einem Hund wie folgt beschrieben und können auch im Sinne der Offenbarung so beschrieben werden, wobei hierzu davon ausgegangen wird, dass der Hund in einer üblichen Haltung auf seinen Vorder- und Hinterläufen auf einem Untergrund steht: Dabei verläuft eine Richtung - auch als Längsrichtung bezeichnet - vom Kopf zum Schwanz des Hunds; den Bereich beim Kopf bezeichnet man dabei auch als "vorne" und den Bereich in Richtung Schwanz als "hinten". Eine weitere Richtung - auch als seitliche Richtung bezeichnet - verläuft von einer Seite des Hunds, insbesondere seiner linken Seite, zu seiner anderen, insbesondere rechten, Seite also insbesondere von "links" nach "rechts". Noch eine weitere Richtung verläuft vom Kopf zum Untergrund, also insbesondere von "oben" nach "unten" und damit zumindest im Wesentlichen quer zu den beiden vorgenannten Richtungen, also quer zur Längsrichtung und quer zur seitlichen Richtung. Insbesondere verlaufen dementsprechend natürliche Biege- und Beugelinien zumindest im Wesentlichen nicht entlang zur Längsrichtung, sondern quer zu dieser. Auch verlaufen insbesondere natürliche Beugelinien zumindest im Wesentlichen entlang der seitlichen Richtung, wobei verschiedene Beugelinien verschieden weit vorne oder hinten beim Hund sind. Entsprechendes gilt für natürliche Biegelinien, die zumindest im Wesentlichen von oben nach unten verlaufen. Demnach sind in einigen Ausführungsformen der Schutzkleidung manche oder alle der mehreren Segmente zumindest im Wesentlichen entlang der seitlichen Richtung und/oder von oben nach unten beweglich miteinander verbunden. Auch sind in einigen Ausführungsformen der Schutzkleidung manche oder alle der mehreren Segmente entlang der Längsrichtung aneinander gereiht - je mit ggf. einem Verbindungsabschnitt dazwischen -, sodass in einigen Varianten die Schutzkleidung bezüglich der Segmente zumindest im Wesentlichen quer zur Längsrichtung unterteilt ist, und wobei insbesondere unterschiedliche der mehreren Segmente je einen unterschiedlichen Bereich des Hunds, welcher weiter vorne oder weiter hinten liegt, im angelegten Zustand der Schutzkleidung bedecken. Auch erstrecken sich in einigen Ausführungsformen manche oder alle der Segmente nicht über den gesamten Bereich, welchen die Schutzkleidung in Längsrichtung abdeckt, sondern erstrecken sich in Längsrichtung jeweils nur über einen Teilabschnitt der abgedeckten Längsrichtung. Dabei hat der jeweilige Teilabschnitt in Längsrichtung eine Länge von weniger als 80%, insbesondere weniger als 60% und weiter insbesondere weniger 40% relativ zur Gesamtlänge der Schutzkleidung in Längsrichtung. Eine kürzere Länge in Längsrichtung kann insbesondere die Beweglichkeit der Schutzkleidung auf vorteilhafte Weise erhöhen. Eine größere Länge kann insbesondere die erzielbare Schutzfläche erhöhen und/oder eine Anzahl an Segmenten für eine bestimmte zu erzielende Schutzfläche sowie entsprechend eine Anzahl an ggf. erforderlichen Verbindungsabschnitten reduzieren und somit insbesondere den Aufbau der Schutzkleidung vereinfachen und/oder deren Robustheit steigern.

In einigen Ausführungsformen weist die Schutzkleidung weiterhin eine Messeinrichtung zum Messen der Feuchtigkeit und/oder Temperatur beim Hund auf, wobei die die Messeinrichtung insbesondere auf der Innenseite der Schutzkleidung angeordnet ist. In einigen Varianten weist die Schutzkleidung einen Befestigungsbereich zum lösbaren Befestigen der Messeinrichtung - etwa mit einem Klettverschluss - auf der Innenseite der Schutzkleidung auf. In einigen Varianten weist die Messeinrichtung einen Temperatursensor auf, der eingerichtet ist, die Körpertemperatur des Hunds zu bestimmen. In einigen Varianten weist die Messeinrichtung zusätzlich oder alternativ zum Temperatursensor einen Feuchtigkeitssensor auf, welcher eingerichtet ist, eine Luftfeuchtigkeit im Inneren der Schutzkleidung und/oder eine Feuchtigkeit der Haut oder Fells des Hunds zu bestimmen. Weiterhin weist die Messeinrichtung in einigen Varianten eine Kommunikationseinrichtung auf, welche eingerichtet ist, die Temperatur und/ oder Feuchtigkeit an ein Endgerät, etwa ein Smartphone zu senden, um insbesondere eine Überwachung der Temperatur bzw. Feuchtigkeit zu ermöglichen. Auf diese vorteilhafte Weise lässt sich ein Vitalzustand des Hunds und lässt sich insbesondere die Temperatur des Hunds überwachen, wodurch sich die mögliche Einsatzdauer für den Hund verlängern und/oder eine Überhitzung oder Überlastung des Hunds, welche zu dessen Tod führen kann, vermeiden lässt. Alternativ oder zusätzlich können einige Varianten der Messeinrichtung eine Alarmeinrichtung aufweisen, welche eingerichtet ist, ein Alarmsignal - etwa akustisch - auszugeben, wenn die Temperatur bzw. Feuchtigkeit außerhalb eines zulässigen Bereichs ist.

In einigen Ausführungsformen weist die Schutzkleidung weiterhin ein Kühlungsmaterial auf, das im angelegten Zustand relativ zu den Segmenten innenliegend, d.h. insbesondere auf der Innenseite der Schutzkleidung angeordnet ist. In einigen Varianten ist das Kühlungsmaterial ein wasserspeicherndes Material, ein Gel - welches vor dem Einsatz gekühlt werden kann - oder ein Phasenwechselmaterial - welches Kälte speichert und unterhalb einer Zieltemperatur für den Hund seine Phase wechselt und somit dort eine hohe Wärmekapazität hat.

In einigen Ausführungsformen weist die Schutzkleidung weiterhin eine Polsterung auf, welche derartig innenliegend, d.h. insbesondere auf der Innenseite der Schutzkleidung, angeordnet ist, dass das Hauptsegment vom Thorax und/oder Abdomen beabstandet ist. Auf diese vorteilhafte Weise lässt sich die Temperatur in der Schutzkleidung und/oder beim Hund senken und somit insbesondere eine Gefahr einer Überhitzung der Hunds reduzieren.

Insbesondere lassen sich das wasserspeichernde Material und die Beabstandung von Thorax und/oder Abdomen auf vorteilhafte Weise kombinieren, wobei die Beabstandung einen Luftaustausch, insbesondere eine Luftzirkulation, verbessert und das wasserspeichernde Material einerseits übermäßige Feuchtigkeit aufnehmen lässt und andererseits durch den Luftaustausch eine Kühlung durch Verdunstung ermöglicht. Somit lässt sich insbesondere die Leistungsfähigkeit des Hunds, insbesondere dessen mögliche Einsatzdauer steigern und der Hund vor Überhitzung schützen.

Auch kann bei einigen Varianten ein Vorteil insbesondere in einer Kombination aus verbesserter Beweglichkeit durch beweglich verbundene Segmente und einer Temperaturregulation, insbesondere Kühlung beim Hund, durch Luftaustausch und/oder Kühlungsmaterial liegen. Dabei reduziert die verbesserte Beweglichkeit eine Widerstandsbelastung des Hunds gegenüber üblichen eher steifen Schutzwesten und somit seine physische Belastung und Erhitzung. Und dabei kann durch die Temperaturregulierung eine bei der Belastung auftretende Wärme vom Hund besser abgeführt werden. Somit wird synergistisch insbesondere eine Erhitzung des Hunds verringert und folglich seine Leistungsfähigkeit verbessert und/oder seine mögliche Einsatzdauer verlängert.

In einigen Ausführungsformen weisen manche oder alle Segmente je eine oder mehrere Taschen zur Aufnahme von einem Schutzpaket mit Schutzmaterial auf.

In einigen Ausführungsformen ist in manche oder alle Segmente jeweils das Schutzmaterial, insbesondere als ein Schutzpaket eingearbeitet, insbesondere integriert und/oder fest vernäht.

Bei einigen Ausführungsformungen, bei welchen Segmente eine Tasche für Schutzmaterial aufweisen und bei welchen in Segmente das Schutzmaterial eingearbeitet ist, weisen eines oder mehrere Segmente eine Kombination aus der Tasche und dem eingearbeiteten Schutzmaterial auf.

Ein Vorteil einer Tasche zur Aufnahme von einem Schutzpaket mit Schutzmaterial kann insbesondere darin liegen, dass sich die Schutzkleidung durch Ausstatten der Tasche mit einem Schutzpaket aus einem entsprechenden Schutzmaterial an jeweilige Anforderungen anpassen lässt - etwa Schnittschutz oder Schussschutz gegenüber Gewicht. Auch lässt sich das Schutzmaterial auf diese Weise wechseln, insbesondere erneuern, und somit die Einsatzdauer der Schutzkleidung verlängern. Ein Vorteil von innenliegenden Taschen oder innenliegenden Öffnungen der Taschen - also insbesondere auf der Innenseite der Schutzkleidung - kann insbesondere darin liegen, dass die Schutzpakete im angelegten Zustand der Schutzkleidung somit besser vor äußeren Einwirkungen, insbesondere Manipulation geschützt sind. Umgekehrt kann ein Vorteil von außenliegenden Taschen bzw. außenliegenden Öffnungen der Taschen - also insbesondere auf der Außenseite der Schutzkleidung - darin liegen, dass sich Schutzpakete auch im angelegtem Zustand einfach wechseln lassen.

Ein Vorteil von in die Schutzkleidung eingearbeitetem Schutzmaterial kann insbesondere darin liegen, dass sich Vielfachlagen an Material vermeiden lassen und die Schutzkleidung somit flacher und/oder leichter ist oder die Schutzkleidung gleichmäßiger geformt werden kann, wodurch sich Druckstellen vermeiden lassen, oder eine Kombination daraus.

In einigen Ausführungsformen weist die Schutzkleidung als Schutzmaterial mehrere verschiedene Schutzmaterialien auf und/oder ist zur Aufnahme von mehreren verschiedenen Schutzmaterialien vorgesehen, insbesondere durch zumindest eine Tasche je innerhalb eines der mehreren Segmente. So ist in einigen Varianten zumindest ein Schutzmaterial in die Schutzkleidung eingearbeitet, während noch zusätzliches, insbesondere anderes, Schutzmaterial, insbesondere als Schutzpakete, noch in der Schutzkleidung aufnehmbar ist - die Schutzkleidung also insbesondere noch bei den Segmenten Taschen hat für das zusätzliche Schutzmaterial. Auch ist in einigen Varianten verschiedenes Schutzmaterial in verschiedenen der mehreren Segmente eingearbeitet und/oder sind die mehreren Segmente vorgesehen verschiedenes Schutzmaterial aufzunehmen, insbesondere abhängig von dem jeweiligen Bereich, welchen das jeweilige Segment bedeckt. Auf diese vorteilhafte Weise lässt sich die Schutzkleidung an jeweilige Gefahren eines Einsatzes anpassen und/oder lassen sich bestimmte Bereiche beim Hund abhängig von einer jeweiligen Gefährdung besser durch ein jeweils geeignetes Schutzmaterial schützen.

In einigen Ausführungsformen weist die Schutzkleidung eine textile Hülle auf, welche wiederum die Segmente und etwaige Verbindungsabschnitte zwischen den Segmenten aufweist. Dabei ist in einigen Varianten die textile Hülle - und sind entsprechend die Segmente und/oder die Verbindungsabschnitte - aus textilem Material hergestellt. Dabei ist das textile Material in einigen Varianten ein Gewebe oder Gewirke aus Aramiden, Para-Aramiden oder Polyamiden oder eine Kombination daraus, wobei insbesondere dessen Materialstärke derart geringer ist als jene des Schutzmaterials, dass sich das textile Material weiterhin in eine Richtung biegen kann, wenn es bereits in einer anderen Richtung gebogen ist, es also insbesondere im angelegten Zustand nicht steif ist. Dies kann durch eine Dehnbarkeit des textilen Materials weiterhin verbessert werden.

Unter einem "Segment" ist im Sinne der Offenbarung zumindest ein Teil der Schutzkleidung zu verstehen, welcher von anderen Segmenten der Schutzkleidung getrennt, d.h. nicht direkt sondern indirekt, etwa mittels eines Verbindungsabschnitts, oder zumindest beweglich mit anderen Segmenten verbunden ist, und welcher Schutzmaterial aufweist oder zur Aufnahme von Schutzmaterial - etwa von Schutzpaketen - vorgesehen ist und hierzu insbesondere eine oder mehrere Taschen aufweist. Dabei ist das Schutzmaterial auf das jeweilige Segment begrenzt, d.h. insbesondere ein Schutzpaket erstreckt sich nicht über mehrere Segmente, sondern vielmehr ist das Schutzmaterial entsprechend der Segmente unterteilt und/oder Schutzpakete mit Schutzmaterial sind entsprechend der Segmente getrennt. Dabei kann in einigen Varianten ein solches Segment, wenn es Schutzmaterial aufweist - etwa weil es in das

Segment eingearbeitet ist oder weil ein Schutzpaket in eine Tasche des Segments gesteckt ist - eine höhere Steifheit aufweisen als andere Teile, insbesondere Verbindungsabschnitte der textilen Hülle.

In einigen Ausführungsformen ist die Schutzkleidung als eine Schutzweste ausgebildet, wobei die Schutzweste im nicht-angelegten Zustand geöffnet und im angelegten Zustand - etwa bauchseitig durch Überlappen von einem oder mehreren der Segmente - geschlossen werden kann sowie insbesondere die Vorder- und Hinterläufe des Hunds frei bleiben.

In einigen Ausführungsformen weist die Schutzkleidung das Schutzmaterial, insbesondere als je eines oder mehrere Schutzpakete eingearbeitet oder aufgenommen in je eines der mehreren Segmente, auf. Dabei ist das Schutzmaterial ausgewählt ist aus einer Gruppe von:
- Ballistischem Material, insbesondere Gewebe oder Gewirke aus Aramiden oderhochmolekulargewichtigen Polyethylenen oder Platten bzw. Folien aus Keramik oder Titan;
- Stichschutzmaterial, insbesondere entsprechend dem ballistischem Material oder Platten bzw. Folien aus Aluminium oder einem Kettenringgeflecht;
- Schnittschutzmaterial, insbesondere entsprechend dem Stichschutzmaterial;
- Schlagschutzmaterial, insbesondere entsprechend dem ballistischem Material, Aluminiumplatten, Platten aus Kunststoffen wie Polycarbonat oder nicht-newtonsche Flüssigkeiten;
oder eine, insbesondere mehrlagige, Kombination daraus.

Durch die Auswahl des jeweiligen Schutzmaterials lässt sich die Schutzkleidung an die jeweiligen Anforderungen des Einsatzes des Hunds anpassen und/oder ein Aufwand zur Wartung der Schutzweste reduzieren.

In einigen Ausführungsformen weist die Schutzkleidung bei einem der Segmente ein Schutzpaket auf, welches so vorgeformt ist, dass es im angelegten Zustand einer Körperform des Hunds jenes Bereichs, bei welchem es getragen wird, entspricht. Auf diese vorteilhafte Weise lässt sich die Schutzwirkung steigern und/oder ein Sitzen der Schutzkleidung verbessern.

In einigen Ausführungsformen weist die Schutzkleidung bei einem der Segmente für den Kreuzbein- und Beckenbereich des Hunds ein Schutzpaket, weist insbesondere das Lendensegment ein Schutzpaket auf, das für den Kreuzbein- und Beckenbereich vorgeformt ist. Auf diese vorteilhafte Weise lässt sich die Schutzwirkung steigern und/oder ein Sitz der Schutzkleidung verbessern.

Unter einer "Platte" im Sinne der Offenbarung ist insbesondere ein flächiges, formstabiles Bauelement zu verstehen, das ein festes Material aufweist oder daraus besteht, wie etwa Keramik, Metall oder Kunststoff. Die Platte weist eine im Verhältnis zu ihrer Fläche geringe, jedoch definierte Dicke auf, wobei die Dicke nicht über die gesamte Fläche hinweg konstant sein muss. Eine Platte kann eine flache bzw. ebene oder auch eine gekrümmte Form aufweisen, beispielsweise eine gebogene oder schalenartige Ausgestaltung. Dabei ist die Form jedoch nicht derart, dass sie als in sich geschlossene Hohlform wie etwa ein Zylinder oder eine Röhre ausgebildet ist. Die Platte dient insbesondere als Schutzmaterial gegen Aufprall-, Stich-, Schnitt- oder Schlageinwirkungen. In verschiedenen Ausführungsformen ist die Platte lösbar in ein Segment oder Schutzmodul aufgenommen oder fest darin integriert, beispielsweise durch textile Einschübe, Verklebung oder stoffschlüssige Verbindung mit einer Trägerschicht.

In einigen Ausführungsformen ist eines der Segmente derartig vorgeformt, dass es im angelegten Zustand einer Körperform des Hunds jenes Bereichs, bei welchem es getragen wird, entspricht. In einigen Varianten ist das Segment mittels eines ovalen Abnähers aus nicht dehnbarem Material - etwa Aramidgewebe oder aus Para-Aramid - vorgeformt. So kann insbesondere das Lendensegment entsprechend dem Kreuzbein und/oder dem Becken des Hunds vorgeformt sein. Auf diese vorteilhafte Weise lässt sich die Schutzwirkung steigern und/ oder ein Sitz der Schutzkleidung verbessern.

In einigen Ausführungsformen weist die Schutzkleidung einen Frontschutz auf, welcher mindestens ein Schutzmodul zum Schutz eines oder mehrerer vorderer Bereiche des Hunds aufweist. Der Frontschutz weist zumindest zwei Drehverbindungen auf, wobei der Frontschutz jeweils mittels einer der Drehverbindungen im Bereich eines der beiden Schultergelenke des Hunds mit der Schutzkleidung verbunden ist. Zumindest eine der Drehverbindungen weist eine Drehverbindungsbasis auf, welche an der Schutzkleidung im Bereich des jeweiligen Schultergelenks befestigt ist, sowie ein Drehverbindungselement, das mit dem Frontschutz verbunden ist. Die Drehverbindungsbasis und das Drehverbindungselement sind derart miteinander verbunden, dass sie relativ zueinander drehbar und voneinander lösbar sind. Die Drehachse der Drehverbindungen verläuft zumindest im Wesentlichen entlang einer natürlichen Beugelinie des Hunds im Bereich der Schultergelenke.

Bei einigen Ausführungsformen, welche einen Frontschutz aufweisen oder daraus bestehen, weist die Drehverbindung zwischen dem Frontschutz und der Schutzkleidung ein mechanisches Gelenk auf, etwa in Form eines Scharniergelenks oder eines Kugelgelenks.

Bei einigen Ausführungsformen, welche einen Frontschutz aufweisen oder daraus bestehen, ist die Drehverbindung als textile Lösung ausgebildet, etwa durch eine flexible Schlaufe, ein bandförmiges Verbindungselement oder einen mehrlagig vernähten Übergangsbereich.

Bei einigen Ausführungsformen, welche einen Frontschutz aufweisen oder daraus bestehen, ist die lösbare Drehverbindung ausgeführt durch Verwendung eines Steck- oder Klickmechanismus, eines Riegels, einer Schraubverbindung oder eines Schnellverschlusses. Alternativ oder zusätzlich kann die lösbare Verbindung auch durch textile Mittel erfolgen, etwa durch Klett, Druckknöpfe. Alternativ oder zusätzlich kann die lösbare Verbindung auch durch magnetische Haltelemente erfolgen.

Bei einigen Ausführungsformen, welche einen Frontschutz aufweisen oder daraus bestehen, ist das Drehverbindungselement ein scheibenförmiges oder ringförmiges Gegenstück, das drehbar in einer Führung innerhalb der Drehverbindungsbasis gelagert ist. In einigen anderen Ausführungsformen sind die Drehverbindungselemente als segmentierte Gelenke mit definierten Drehrichtungen und/oder einstellbaren Winkeln ausgebildet, um einen kontrollierten Bewegungsbereich zu ermöglichen.

Bei einigen Ausführungsformen, welche einen Frontschutz aufweisen oder daraus bestehen, ist das mindestens eine Schutzmodul ein Brustschutzmodul, ein Halsschutzmodul oder ein Brust-/Hals-Schutzmodul, welches zum Schutz der Brust des Hunds, seines Halses oder von Brust und Hals des Hunds ausgebildet ist.

Bei einigen Ausführungsformen, welche einen Frontschutz aufweisen oder daraus bestehen, ist das mindestens eine Schutzmodul ein Vorderlaufschutzmodul, welches zum Schutz eines der Vorderläufe des Hunds ausgebildet ist.

Unter einem "vorderen Bereich" des Hunds im Sinne der Offenbarung ist zumindest ein Bereich des Körpers zu verstehen, der in der Längsrichtung des Hunds näher zum Kopf als zum Schwanz liegt, insbesondere relativ zu einer zentralen Position am Thorax. Ein vorderer Bereich kann insbesondere den Hals, die Brust, die Schulterregion sowie die Vorderläufe des Hunds betreffen oder eine Kombination daraus.

Entsprechend weisen einige Ausführungsformen mit bzw. des Frontschutzes mehrere Schutzmodule auf, welche jeweils ausgebildet sind zum Schutz des Halses, der Brust, des linken und des rechten Vorderlaufs des Hunds oder einer Kombination daraus. In einer Variante weist der Frontschutz ein Schutzmodul zum kombinierten Schutz von Brust und Hals des Hunds sowie je ein Schutzmodul für jeden der beiden Vorderläufe des Hunds auf.

Ein Vorteil kann insbesondere darin liegen, dass durch die drehbare und lösbare Verbindung des Frontschutzes mit der Schutzkleidung eine physiologisch günstige Beweglichkeit im Schulterbereich des Hunds erhalten bleibt. Der Frontschutz kann dadurch Relativbewegungen mitvollziehen, ohne die Bewegungsfreiheit des Hunds wesentlich einzuschränken, insbesondere beim Vorstrecken oder Zurückziehen der Vorderläufe.

Ein Vorteil kann auch darin liegen, dass durch die lösbare Ausgestaltung der Drehverbindungen ein Austausch oder eine bedarfsgerechte Anpassung des Frontschutzes ermöglicht wird. Dies kann insbesondere Wartung, Reinigung oder den Wechsel zwischen verschiedenen Schutzmodulen für unterschiedliche Einsätze oder Hunderassen erleichtern. Bereits durch ein Lösen von einer Drehverbindung lässt sich eine Erleichterung beim Anlegen der Schutzkleidung erzielen.

Auch kann ein Vorteil in der Kombination mehrerer Schutzmodule liegen, durch welche der Hund frontal zu einem überwiegenden Teil abgedeckt werden kann, ohne die Schutzkleidung als Ganzes zu verändern. So kann der Schutz modular erweitert oder reduziert werden, etwa durch gezieltes Anbringen oder Entfernen von Modulen für Brust, Hals oder Vorderläufe.

In einigen Ausführungsformen weist das mindestens eine Schutzmodul des Frontschutzes Schutzmaterial auf, welches direkt in das Schutzmodul eingearbeitet, integriert oder fest vernäht ist.

Alternativ oder zusätzlich weist in einigen Ausführungsformen das mindestens eine Schutzmodul eine oder mehrere Taschen zur Aufnahme von Schutzmaterial, insbesondere von Schutzpaketen, auf. Auf diese Weise lässt sich das Schutzmodul des Frontschutzes an unterschiedliche Gefahrenlagen oder Einsatzbereiche anpassen, ohne vom funktionalen Aufbau der übrigen Schutzkleidung abzuweichen.

Bei einigen Ausführungsformen, bei welchen das mindestens eine Schutzmodul des Frontschutzes Schutzmaterial aufweist und entsprechend bei Taschen für Schutzmaterial, ist das Schutzmaterial des Schutzmoduls oder entsprechend das Schutzmaterial des Schutzpakets gleich oder entsprechend jenem Schutzmaterial, welches in Verbindung mit den Segmenten der Schutzkleidung beschrieben ist, insbesondere hinsichtlich der Auswahl aus ballistischem, Stich-, Schnitt- oder Schlagschutzmaterial oder einer mehrlagigen Kombination daraus. Die dort beschriebenen technischen Effekte sowie Vorteile gelten entsprechend.

Bei einigen Ausführungsformen, bei welchen das mindestens eine Schutzmodul des Frontschutzes Schutzmaterial aufweist, ist das mindestens eine Schutzmodul des Frontschutzes vorgeformt, sodass es im angelegten Zustand einer Körperform des Hunds in einem jeweiligen vorderen Bereich folgt. Entsprechend bei einigen Ausführungsformen, bei welchen das mindestens eine Schutzmodul des Frontschutzes eine Tasche für ein Schutzpaket aufweist, ist das Schutzpaket des Frontschutzes vorgeformt, sodass es im angelegten Zustand einer Körperform des Hunds in einem jeweiligen vorderen Bereich folgt. Dabei kann ein Vorteil darin liegen, dass das Schutzmodul besonders eng anliegen kann, ohne Druckstellen zu erzeugen, wodurch sich insbesondere die Schutzwirkung und/oder der Tragekomfort verbessern lassen.

Bei einigen Ausführungsformen, bei welchen das Schutzmodul vorgeformt ist, ist das Schutzmodul für den Bereich der Brust, des Halses oder eines Vorderlaufs des Hunds anatomisch konturiert, etwa durch Abnäher, textile Formelemente oder elastische Vorformstrukturen. Alternativ oder zusätzlich, ist in einigen Ausführungsformen das Schutzmaterial selbst - etwa als Schutzpaket - vorgeformt oder in einer Form aufgenommen, die eine angepasste Sitz- und Schutzwirkung im jeweiligen Anwendungsbereich verbessert.

In einigen Ausführungsformen ist das Schutzmaterial des Schutzmoduls oder des Schutzpakets weitgehend formstabil oder reversibel verformbar vorgeformt, beispielsweise durch Verwendung eines steifen oder teilweise formfesten Materials. Dies kann in einigen Varianten durch eine feste Platte aus Keramik, Metall oder Kunststoff erfolgen. Alternativ oder zusätzlich kann dies in einigen Varianten durch ein mehrlagiges Schichtmaterial, das stoffschlüssig miteinander verbunden ist, etwa durch Kleben, Verschweißen oder Verschmelzen, erfolgen. Hierzu kann in einigen der Varianten das Schutzmodul, das Schutzmaterial und/oder das Schutzpaket zunächst in eine jeweils anatomisch angepasste Form gepresst und so für eine definierte Passform vorbereitet werden, wobei anschließend oder dabei das stoffschlüssige Verbinden erfolgt.

Ein Vorteil solcher vorgeformter Schutzmodule kann insbesondere in einer verbesserten Schutzabdeckung liegen, insbesondere durch gleichmäßigen Sitz ohne Falten oder Verrutschen. Auch kann eine gezielte Kraftverteilung beim Aufprall - etwa beim Beschuss - erreicht werden, was das Verletzungsrisiko für den Hund reduziert. Bei reversibel verformbaren Strukturen kann darüber hinaus eine bessere Anpassung an verschiedene Bewegungsphasen erzielt werden, etwa beim Strecken der Vorderläufe oder bei Drehbewegungen im Halsbereich. Auch lässt sich durch die Formstabilität die Schutzwirkung weiter steigern.

Bei einigen Ausführungsformen, bei welchen die Schutzkleidung einen Frontschutz und ein Gurtsystem aufweist, ist der Frontschutz mit dem Gurtsystem verbunden. Die jeweilige Drehverbindung, insbesondere deren Drehverbindungsbasis, ist dabei am Gurtsystems im Bereich eines jeweiligen Schulterbereichs des Hunds, insbesondere direkt, befestigt, insbesondere an einer Gurtsystemverbindungsstelle. In einigen solcher Varianten bildet das Gurtsystem die strukturelle Anbindung für den Frontschutz und fungiert als Trägerelement für dessen mechanische Kopplung.

Ein Vorteil der, insbesondere direkten, Verbindung der Drehverbindung mit dem Gurtsystem kann insbesondere in einer höheren strukturellen Stabilität und einer gezielten Kraftübertragung über das Gurtsystem liegen. Die Verbindung an belastungsgeeigneten Punkten des Gurtsystems kann eine bessere Verteilung von Zugkräften, die beim Einsatz des Frontschutzes auftreten können - etwa beim Einsatz eines Griffes oder bei dynamischen Bewegungen des Hunds ermöglichen. Auch kann durch diese Anbindung die Nachrüstbarkeit und Wiederverwendbarkeit des Frontschutzes verbessert werden, da dieser wenig von einer konkreten Ausgestaltung einzelner Segmente der Schutzkleidung beim Schulterbereich des Hunds befestigt werden kann.

In einigen Ausführungsformen weist die Schutzkleidung, insbesondere die Schutzweste, eine Halskrause auf. Dies kann ergänzend oder alternativ zu einem Frontschutz der Schutzkleidung sein. Auf diese vorteilhafte Weise lässt sich der Hals der Hunds schützen und/oder die Schutzkleidung zusätzlich auch mittels der Halskrause am Hund befestigen.

In einigen Ausführungsformen weist die Schutzkleidung weiterhin ein Gurtsystem mit mehreren Gurtbändern auf. Dabei ist das Gurtsystem zur Befestigung am Hund ausgebildet und weist einen Verschlussmechanismus, etwa eine oder mehrere Schnallen, auf. Dabei verlaufen die Gurtbänder zumindest im Wesentlichen zwischen der Innenseite und der Außenseite der Schutzkleidung und sind zumindest teilweise mit den Segmenten und/oder Verbindungsabschnitten verbunden, insbesondere vernäht. Weiterhin treten die Gurtbänder an jenen Stellen zur Außenseite, an welchen die Gurtbänder mittels des Verschlussmechanismus zum Schließen der Schutzkleidung und zur Befestigung am Hund verbindbar sind.

Bei einigen Ausführungsformen mit textiler Hülle verlaufen die Gurtbänder des Gurtsystems weitgehend in der textilen Hülle, sodass insbesondere an der Innenseite der Schutzweste zumindest im Wesentlichen keine oder kaum Gurtbänder sind und somit im angelegten Zustand im Wesentlichen keine bzw. kaum Gurtbänder direkt am Hund anliegen und sodass insbesondere an der Außenseite der Schutzweste die Gurtbänder zumindest im Wesentlichen nur an Stellen hervortreten, bei welchen diese mittels des Verschlussmechanismus miteinander zum Befestigen, d.h. insbesondere zum Schließen der Schutzkleidung, verbindbar sind.

Ein Vorteil des Gurtsystems kann insbesondere darin liegen, dass dieses die Schutzkleidung stabilisiert und eine Befestigung dieser am Hund ermöglicht, wobei die Gurtbänder je eine Zugrichtung definieren und entlang dieser die anderen Teile der Schutzkleidung - etwa die textile Hülle, die Segmente und/oder die Verbindungsabschnitte - entlasten sowie zwischen je zwei Lastpunkten insbesondere die jeweils kürzeste Verbindung bilden. Auch kann ein Vorteil durch das Verlaufen zwischen Außen- und Innenseite insbesondere darin liegen, dass Stellen an denen sich die Schutzkleidung, insbesondere die Gurtbänder mit einer Umgebung beim Einsatz verhaken könnten, reduziert werden und/oder dass das derartige Gurtsystem mit etwaigen zusätzlichen Gurtsystemen, welche direkt am Hund angelegt werden, kompatibel ist. In einigen Varianten verlaufen die Gurtbänder zumindest im Wesentlichen zwischen der Außenseite und dem Schutzmaterial. Auf diese vorteilhafte Weise lässt sich das Schutzmaterial zur Druckverteilung nutzen, womit sich Druckstellen reduzieren und eine Belastung, etwa eine Zugbelastung, gleichmäßiger auf den Hund verteilen lässt.

Bei einigen Ausführungen, bei welchen die Schutzkleidung ein Gurtsystem aufweist, weist die Schutzkleidung weiterhin einer Befestigungseinrichtung, insbesondere eine Befestigungsplatte, bei dem Hauptsegment im Bereich der Wirbelsäule des Hunds auf, wobei die Befestigungseinrichtung zur lösbaren Befestigung eines Griffs an ihr ausgebildet ist und mit dem Gurtsystem direkt mechanisch verbunden, insbesondere vernäht, ist. In einigen Varianten weist die Befestigungseinrichtung eine oder mehrere Schraubgewinde zur lösbaren Befestigung auf. Alternativ oder zusätzlich weist in einigen Varianten die Befestigungseinrichtung einen Magnetverschluss zur lösbaren Befestigung auf.

Auf diese vorteilhafte Weise lässt sich ein zentraler Lastansatzpunkt bilden, von welchem aus sich Lasten, insbesondere Zugbelastung, insbesondere auch über das Gurtsystem auf den Hund anatomisch günstig übertragen lassen. Insbesondere lässt sich so ein Würgen am Hals des Hundes vermeiden. Auch kann ein Vorteil der lösbaren Befestigung insbesondere darin liegen, dass der Griff oder ein anderer dort befestigter Gegenstand für den Einsatz gelöst und entfernt werden kann, womit sich insbesondere ein Risiko für ein Hängenbleiben mit dem Griff / anderen Gegenstand - etwa im Einsatz an einem Gebüsch - reduzieren lässt. Ein Vorteil der Befestigungsplatte als Befestigungseinrichtung kann insbesondere darin liegen, dass diese flach ist und sich somit das Risiko des Hängenbleibens weiter reduzieren lässt. Auch kann ein Vorteil der Befestigungseinrichtung darin liegen, dass abhängig vom Einsatzszenario verschiedene Gegenstände an dieser - insbesondere an der Oberseite und insbesondere universell - befestigt werden können - etwa unterschiedliche Griffe, Ösen, ein Ankerpunkt oder eine Kamera. Die Kombination aus Gurtsystem und Befestigungseinrichtung verbessert etwa ein Abseilen des Hunds, wobei der Hund aufgrund der zentralen Position der Befestigungseinrichtung balanciert in einer bequemen Position ist und über eine längere Zeit bleiben kann.

Ein zweiter Aspekt der Erfindung betrifft ein Gurtsystem für eine Schutzkleidung für einen Hund, insbesondere eine Schutzkleidung gemäß dem ersten Aspekt der Erfindung. Das Gurtsystem weist mehrere Gurtsystemverbindungsstellen zur modularen Verbindung des Gurtsystems mit Segmenten und/oder Verbindungsabschnitten der Schutzkleidung sowie einen Verschlussmechanismus auf und ist zur Befestigung durch Anlegen am Hund ausgebildet.

Die möglichen Vorteile, Ausführungsformen oder Varianten des ersten Aspekts der Erfindung, insbesondere solcher mit einem Gurtsystem, gelten entsprechend auch für das Gurtsystem gemäß dem zweiten Aspekt der Erfindung.

Auch kann ein Vorteil des Gurtsystems darin liegen, auftretende mechanische Belastungen, insbesondere Zugkräfte beim Einsatz, gezielt über strukturell verstärkte Verbindungspunkte aufzunehmen und zu verteilen. Dies kann insbesondere die textile Hülle der Schutzkleidung entlasten und somit die Lebensdauer der Schutzkleidung verlängern oder Druckstellen beim Hund vermeiden..

In einigen Ausführungsformen sind die Gurtsystemverbindungsstellen derart angeordnet und ausgebildet, dass bei Befestigung von Segmenten und/oder Verbindungsabschnitten der Schutzkleidung mittels der Gurtsystemverbindungsstellen zumindest jene Verbindungsabschnitte, welche die Segmente beweglich miteinander verbinden, entlang natürlicher Biege- und/oder Beugelinien des Hunds verlaufen.

Ein Vorteil des Gurtsystems kann insbesondere darin liegen, dass sich durch die Gurtsystemverbindungsstellen eine anatomisch günstige Anordnung der Schutzkleidung am Hund realisieren lässt. Insbesondere wird ermöglicht, dass Verbindungsabschnitte zwischen den Segmenten der Schutzkleidung so positioniert sind, dass sie entlang natürlicher Biege- und/oder Beugelinien des Hunds verlaufen. Dadurch kann die Schutzkleidung Bewegungen des Hunds, insbesondere Dreh-, Biege- oder Beugebewegungen, besser mitvollziehen, ohne den Hund wesentlich einzuschränken.

In einigen Ausführungsformen ist das Gurtsystem als modulare Trägerstruktur ausgebildet. Die Gurtsystemverbindungsstellen sind so ausgebildet, dass unterschiedliche Module der Schutzkleidung, insbesondere einzelne oder verbundene Segmente, Verbindungsabschnitte oder ein Frontschutz, am Gurtsystem befestigt werden können.

Unter einer modularen Trägerstruktur im Sinne der Offenbarung ist insbesondere ein mechanischer Träger zu verstehen, der so ausgebildet ist, dass daran verschiedene, funktional zugehörige, jedoch voneinander lösbare Komponenten, insbesondere Module, befestigt werden können. Dies betrifft insbesondere einzelne zusätzliche Segmente, Verbindungsabschnitte oder zusätzliche Funktionsmodule wie ein Frontschutz sowie mehrere bereits miteinander verbundene Segmente oder auch einen Griff.

Unter Gurtsystemverbindungsstellen, die so ausgestaltet sind, dass daran Segmente und/oder Verbindungsabschnitte der Schutzkleidung befestigt werden können, ist im Sinne der

Offenbarung insbesondere zu verstehen, dass diese Verbindungsstellen strukturelle Merkmale aufweisen, welche eine mechanische Verbindung mit den genannten Komponenten ermöglichen. Dies kann in einigen Varianten durch textiltechnische Ausführungen erfolgen, wie verstärkte Endbereiche der Gurtbänder, zusätzliche Lagen zur Vernähung, vorgesehene Laschen, Durchführungen, Schlaufen, Klettflächen oder andere Verbindungsmittel. Die Gurtsystemverbindungsstellen bilden dabei feste oder lösbare Anbindungspunkte, die eine Kraftübertragung zwischen dem Gurtsystem und den Komponenten der Schutzkleidung sicherstellen.

Ein Vorteil kann in der Modularität des Gurtsystems liegen, wodurch über die Gurtsystemverbindungsstellen das Gurtsystem mit unterschiedlichen Modulen, wie einem Frontschutz oder Segmenten, kombiniert werden. Auf diese Weise lässt sich die Schutzkleidung an unterschiedliche Einsatzbedingungen, Hundegrößen oder Schutzanforderungen anpassen. Auch kann die Wiederverwendbarkeit des Gurtsystems verbessert werden, indem einzelne Module, etwa Segmente oder Frontschutz, im Bedarfsfall ersetzt werden, ohne das gesamte Gurtsystem auszutauschen.

In einigen Ausführungsformen sind die Gurtbänder des Gurtsystems miteinander verbunden und in ihrer Länge bemessen, dass diese sie durch, insbesondere textile, Lagen der Schutzkleidung und/oder zwischen einer Innen- und einer Außenseite der Schutzkleidung, hindurchgeführt werden können.

Auf diese vorteilhafte Weise lässt sich ein geschützter Verlauf innerhalb der Schutzkleidung sowie eine definierte mechanische Kopplung an die Schutzkleidung entlang vorgesehener Verbindungslinien oder Flächen erzielen.

In einigen Ausführungsformen sind die Gurtbänder des Gurtsystems derart geführt und der Verschlussmechanismus angeordnet, dass sie an definierten Stellen zur Außenseite der Schutzkleidung austreten, an welchen eine Verbindung mittels des Verschlussmechanismus vorgesehen ist.

Auf diese vorteilhafte Weise lässt sich eine sichere, außenliegende Zugänglichkeit zum Schließen der Schutzkleidung, während der übrige Verlauf der Gurtbänder innerhalb der Struktur verbleibt, was eine Reduzierung von Scheuerstellen oder Verhakungsrisiken bewirken kann.

Ein dritter Aspekt der Erfindung betrifft einen Frontschutz, insbesondere zur Verwendung in Verbindung mit einer Schutzkleidung gemäß dem ersten Aspekt der Erfindung oder einem Gurtsystem gemäß dem zweiten Aspekt der Erfindung. Der Frontschutz weist mindestens ein Schutzmodul zum Schutz eines oder mehrerer vorderer Bereiche des Hunds auf sowie je ein Drehverbindungselement, das mit dem Schutzmodul verbunden ist und jeweils für eine Anordnung im Bereich eines der beiden Schulterbereiche des Hunds vorgesehen ist. Jedes der Drehverbindungselemente ist eingerichtet, mit einer jeweiligen Drehverbindungsbasis eine Drehverbindung derart auszubilden, dass das jeweilige Drehverbindungselement und die jeweilige Drehverbindungsbasis drehbar und voneinander lösbar miteinander verbindbar sind.

Die möglichen Vorteile, Ausführungsformen oder Varianten des ersten und des zweiten Aspekts der Erfindung, insbesondere solcher im Zusammenhang mit einem Frontschutz, gelten entsprechend auch für den Frontschutz gemäß dem dritten Aspekt der Erfindung.

Ein vierter Aspekt der Erfindung betrifft einen Nachrüstsatz für eine Schutzkleidung für einen Hund, insbesondere zur nachträglichen Ergänzung oder Anpassung einer Schutzkleidung gemäß dem ersten Aspekt der Erfindung oder in Kombination mit einem Gurtsystem gemäß dem zweiten Aspekt der Erfindung. Der Nachrüstsatz weist einen Frontschutz gemäß dem dritten Aspekt der Erfindung auf sowie für jede der Drehverbindungen des Frontschutzes je ein Befestigungselement mit einer Drehverbindungsbasis, wobei jedes Befestigungselement ausgebildet ist, an der Schutzkleidung im Bereich eines Schulterbereichs befestigt zu werden.

Die möglichen Ausführungsformen, Varianten und technischen Vorteile im Zusammenhang mit dem Frontschutz gemäß dem dritten Aspekt der Erfindung gelten entsprechend auch für den Nachrüstsatz gemäß dem vierten Aspekt der Erfindung.

Ein Vorteil des Nachrüstsatzes kann insbesondere darin liegen, dass bestehende Schutzkleidungen für Hunde, auch solche anderer Hersteller, nachträglich mit einem Frontschutz ausgestattet werden können. So lässt sich die Flexibilität und Nutzungsdauer vorhandener Schutzsysteme erhöhen, ohne dass eine vollständige Neuausstattung erforderlich ist.

Die Befestigungselemente des Nachrüstsatzes sind in einigen Ausführungsformen so ausgebildet, dass sie an unterschiedlichen Positionen und Teilen der Schutzkleidung, etwa einem Segment oder einem Gurtsystem, befestigt werden können, etwa durch Vernähen, Verkleben, Verschrauben oder textile Verbindungsmittel wie Klettverschlüsse. Dadurch lässt sich insbesondere die Verbindung mit unterschiedlichen Materialien oder Ausführungen der Schutzkleidung realisieren.

Durch die drehbare und lösbare Verbindung bei den Drehverbindungen, also insbesondere zwischen der jeweiligen Drehverbindungsbasis und dem jeweiligen Drehverbindungselement, lässt sich eine modulare Lösung bereitstellen, bei welcher sich der Frontschutz, insbesondere wartungsfreundlich und/oder individuell auf den Hund und den Einsatz anpassbar, anbringen und wieder entfernen lässt, wodurch insbesondere die modulare Erweiterbarkeit der Schutzkleidung verbessert wird.

Unter einem "Nachrüstsatz" im Sinne der Offenbarung ist insbesondere eine Zusammenstellung von Komponenten, Teilen und/oder Modulen zu verstehen, welche dazu vorgesehen sind, eine bereits vorhandene Schutzkleidung oder Gurtsystem funktional zu erweitern oder zu ergänzen.

Ein fünfter Aspekt der Erfindung betrifft ein Verfahren zur Herstellung einer Schutzkleidung für einen Hund, insbesondere einer Schutzkleidung gemäß dem ersten Aspekt der Erfindung. Das Verfahren umfasst das Bereitstellen mehrerer Segmente, die Schutzmaterial aufweisen oder zur Aufnahme von Schutzmaterial ausgebildet sind. Eines der Segmente ist dabei als Hauptsegment ausgebildet, welches im angelegten Zustand der Schutzkleidung einen Bereich beim Thorax und Abdomen des Hunds zumindest im Wesentlichen röhrenförmig umschließt. Weiterhin umfasst das Verfahren das Ausbilden eines oder mehrerer Verbindungsabschnitte aus textilem Material zwischen zumindest zwei der Segmente. Die Verbindungsabschnitte sind zum beweglichen Verbinden der Segmente eingerichtet und in einer Weise angeordnet und ausgebildet, dass sie im angelegten Zustand der Schutzkleidung entlang natürlicher Biege- und/oder Beugelinien des Hunds verlaufen.

Die möglichen Vorteile, Ausführungsformen oder Varianten des ersten, zweiten, dritten und vierten Aspekts der Erfindung, insbesondere wie sie im Zusammenhang mit der Schutzkleidung, deren Segmenten und der beweglichen Verbindung der Segmente entlang natürlicher Biege- und Beugelinien des Hunds beschrieben sind, gelten entsprechend auch für das Herstellungsverfahren gemäß dem fünften Aspekt der Erfindung.

Ein Vorteil des Verfahrens kann insbesondere darin liegen, dass durch die vorgesehene Ausgestaltung und Anordnung der Verbindungsabschnitte die Schutzkleidung in ihrer endgültigen Konfiguration eine anatomisch und funktionell angepasste Beweglichkeit aufweist.

In einigen Ausführungsformen erfolgt das Ausbilden der Verbindungsabschnitte durch textile Verarbeitungstechniken wie Vernähen, Verweben, Verschweißen, Klebetechniken oder Kletttechniken, wobei die jeweilige Flexibilität, Festigkeit und Positionierung der Verbindung gezielt an die Schutzanforderung und Anatomie des Hunds angepasst wird.

Durch den modularen Aufbau der Segmente lässt sich das Verfahren in einigen Varianten auch halbautomatisiert oder variabel je nach Hundegröße, Einsatzzweck oder gewünschter Schutzwirkung umsetzen.

Ein sechster Aspekt der Erfindung betrifft eine Verwendung einer Schutzkleidung für einen Hund, insbesondere einer Schutzkleidung gemäß dem ersten Aspekt der Erfindung oder hergestellt gemäß dem fünften Aspekt der Erfindung. Das Verwenden umfasst zumindest das Bereitstellen der Schutzkleidung und das Anlegen der Schutzkleidung an den Hund. Beim Anlegen wird die Schutzkleidung relativ zum Hund positioniert, sodass die Segmente der Schutzkleidung jeweils einen Teil des Rumpfbereichs zwischen den Vorderläufen und den Hinterläufen des Hunds bedecken. Dabei verlaufen die beweglichen Verbindungen zwischen den Segmenten entlang natürlicher Biege- und/oder Beugelinien des Hunds, wodurch eine physiologisch günstige Beweglichkeit der Schutzkleidung im Einsatzzustand erzielt wird. Das Hauptsegment der Schutzkleidung wird dabei im Bereich von Thorax und Abdomen des Hunds angeordnet und umschließt diesen zumindest im Wesentlichen röhrenförmig. Dies ermöglicht eine stabile Positionierung der Schutzkleidung sowie eine flächige Schutzwirkung in einem besonders verletzungsanfälligen Bereich des Hundekörpers.

Die möglichen Vorteile, Ausführungsformen oder Varianten des ersten bis fünften Aspekts der Erfindung, insbesondere wie sie im Zusammenhang mit der Schutzkleidung, deren Segmenten und der beweglichen Verbindung der Segmente entlang natürlicher Biege- und Beugelinien des Hunds beschrieben sind, gelten entsprechend auch für die Verwendung gemäß dem sechsten Aspekt der Erfindung.

In einigen Ausführungsformen umfasst die Verwendung der Schutzkleidung, dass der Hund mit der angelegten Schutzkleidung in einem realen Einsatz tätig ist und/oder durch eine Person für eine Tätigkeit eingesetzt wird. Ein solcher Einsatz kann in einigen Varianten Tätigkeiten im Rahmen der Jagd, der Rettung, der Polizei oder des militärischen Dienstes umfassen, bei welchen der Hund potenziellen Gefahren ausgesetzt ist und die Schutzkleidung dem Schutz seines Körpers vor äußeren Einwirkungen dient.

Unter einem "Einsatz" im Sinne der Offenbarung ist insbesondere ein Geschehen oder Szenario / Einsatzszenario zu verstehen, bei welchem der Hund eine Aufgabe übernimmt, insbesondere für oder unter Anleitung einer Person. Der Einsatz kann dabei innerhalb eines übergeordneten Zusammenhangs erfolgen, etwa in einer taktischen, operativen oder rettungsdienstlichen Lage, muss dies aber nicht. Ein Einsatz kann insbesondere Tätigkeiten wie das Erkunden, Aufspüren, Führen, Retten, Bewachen oder Fassen umfassen oder eine Kombination daraus. Der Hund kann dabei gezielt durch eine Person eingesetzt oder begleitet werden. Solche Einsätze können insbesondere Tätigkeiten im Rahmen der Jagd, der Polizei, des militärischen Dienstes oder von Rettungseinsätzen, bei denen der Hund potenziellen äußeren Gefahren ausgesetzt ist und bei welchen die Schutzkleidung dem körperlichen Schutz des Hunds dient, betreffen. Auch können vorbereitende oder begleitende Phasen unter einen solchen Einsatz fallen oder ein Teil eines solche Einsatzes sein, insbesondere Trainings, Übungseinsätze, Testszenarien, Transportphasen im Zusammenhang mit einem Einsatz sowie Zustände erhöhter Bereitschaft.

Weitere Vorteile, Merkmale und Anwendungsmöglichkeiten ergeben sich aus der nachfolgenden detaillierten Beschreibung von Ausführungsbeispielen und/oder aus den Figuren.

Während die obigen Aspekte der Erfindung und die Ausführungsformen sowie die folgenden Ausführungsbeispiele und Figuren bezüglich einem Hund dargestellt werden, versteht es sich insbesondere, dass im Sinne der Erfindung eine Schutzkleidung in anderen Ausführungsformen entsprechend für andere vierbeinige Tiere, insbesondere Nutztiere ausgebildet sein kann.

### Kurze Beschreibung der Figuren

Die Erfindung wird nachfolgend unter Bezugnahme auf die Figuren anhand vorteilhafter Ausführungsbeispiele näher erläutert. Gleiche Elemente oder Bauteile der Ausführungsbeispiele werden im Wesentlichen durch gleiche Bezugszeichen gekennzeichnet, falls dies nicht anders beschrieben wird oder sich nicht anders aus dem Kontext ergibt.

Hierzu zeigen, teilweise schematisiert:
Fig. 1 eine Schutzkleidung nach einer Ausführungsform;
Fig. 2 eine weitere Ansicht der Schutzkleidung aus Fig. 1 mit zusätzlichen Elementen;
Fig. 3 a und b einen Hund und natürliche Biege- und Beugelinien von diesem;
Fig. 4 die Schutzkleidung aus Fig. 2 im angelegten Zustand;
Fig. 5 eine Schutzkleidung nach einer weiteren Ausführungsform; und
Fig. 6 eine Schutzkleidung mit einem Frontschutz gemäß einer weiteren Ausführungsform.

### Detaillierte Beschreibung von Ausführungsbeispielen

Die Figuren sind schematische Darstellungen verschiedener Ausführungsbeispiele der vorliegenden Erfindung. In den Figuren dargestellte Elemente und/oder Bauteile sind nicht notwendigerweise maßstabsgetreu dargestellt. Vielmehr sind die verschiedenen, in den Figuren dargestellten Elemente und/oder Bauteile derart wiedergegeben, dass ihre Funktion und/oder ihr Zweck dem Fachmann verständlich werden.

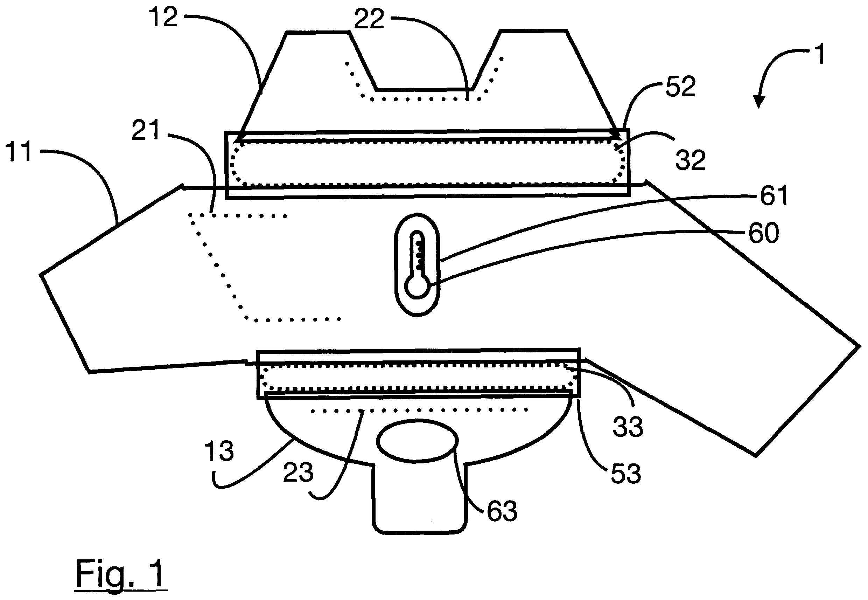

Fig. 1 zeigt schematisch eine Ansicht von oben auf eine Schutzkleidung 1 für einen Hund in einem nicht-angelegten, geöffneten Zustand nach einer Ausführungsform der vorliegenden Erfindung, wobei eine Innenseite der Schutzkleidung zum Betrachter gerichtet und somit dargestellt ist.

In einem Ausführungsbeispiel weist die Schutzkleidung 1 mehrere Segmente, also insbesondere ein Hauptsegment 11, ein Schultersegment 12 und ein Lendensegment 13 aus textilem Material, insbesondere aus Para-Aramid oder Polyamid auf. Insbesondere ist die Schutzkleidung als Schutzweste ausgebildet. Zudem sind innenliegende Öffnungen der Taschen 21, 22 und 23 der Segmente 11, 12 und 13 durch gepunktete Linien in Fig. 1 angedeutet. Weiterhin weist die Schutzkleidung 1 einen Verbindungsabschnitt 32 aus Para-Aramid oder Polyamid auf, welcher das Hauptsegment 11 und das Schultersegment 12 beweglich verbindet, und einen weiteren Verbindungsabschnitt 33 aus Para-Aramid oder Polyamid auf, welcher das Hauptsegment 11 und das Lendensegment 13 beweglich miteinander verbindet. In der Ansicht von Fig. 1 über den beiden Verbindungsabschnitten 52 und 53 sind je eine Polsterung 52 bzw. 53 der Schutzkleidung 1 angeordnet. Da diese auf der Innenseite der Schutzkleidung weiter hervorstehen als das Hauptsegment 11, wird das Hauptsegment im angelegten Zustand durch die Polsterungen 52 und 53 vom Hund beabstandet und so die Luftzirkulation verbessert. Überdies weisen die Polsterungen 52 und 53 in einigen Varianten das Schutzmaterial auf, sodass diese zugleich eine Schutzwirkung bei den Verbindungsabschnitten haben. Alternativ oder zusätzlich können die Verbindungsabschnitte Schutzmaterial oder Taschen für ein solches aufweisen. Außerdem weist das Lendensegment 13 einen ovalen Abnäher aus einem nicht-dehnbaren Material, insbesondere aus dem Para-Aramid-Gewebe oder Polyamid auf, mittels welchem das Lendensegment entsprechend dem Becken des Hunds vorgeformt ist. Schließlich weist das Hauptsegment 11 auf der Innenseite einen Befestigungsbereich 61 auf, an welchem eine Messeinrichtung 60 der Schutzkleidung 1 lösbar befestigt ist. Die Messeinrichtung 60 ist eingerichtet, im angelegten Zustand der Schutzkleidung die Temperatur des Hunds und die Luftfeuchtigkeit zu messen und an ein Smartphone eines Hundeführers per Funkverbindung zu übertragen.

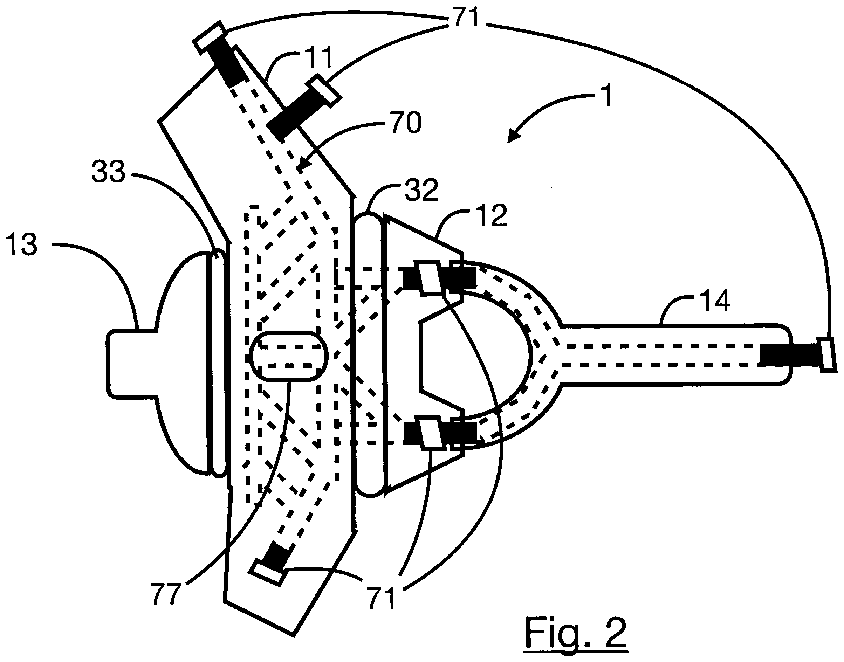

Fig. 2 zeigt schematisch eine weitere Ansicht von oben auf die Schutzkleidung 1 im nicht-angelegten, geöffneten Zustand nach der Ausführungsform aus Fig. 1, wobei in Fig. 2 eine Außenseite der Schutzkleidung zum Betrachter gerichtet und somit dargestellt ist. Zudem ist in Fig. 2 ein Gurtsystem 70 mit mehreren Gurtbändern dargestellt, welches in Fig. 1 der Übersichtlichkeit halber nicht dargestellt ist.

In einem Ausführungsbeispiel weist die Schutzkleidung 1 zusätzlich als eines der mehreren Segmente ein Brustsegment 14 auf. Das Gurtsystem 70 verläuft größtenteils zwischen der Innenseite und der Außenseite der Schutzkleidung, was in Fig. 2 durch gestrichelte Linien dargestellt ist. Zudem weist das Gurtsystem 70 als Verschlussmechanismus mehrere Schnallen 71 auf. Dabei treten die Gurtbänder an jenen Stellen zur Außenseite hervor, an welchen die Gurtbänder mittels der Schnallen 71 miteinander zum Anlegen und Schließen der Schutzkleidung verbunden werden, was in Fig. 2 durch durchgehend schwarze Linien dargestellt ist. Statt mittels eines Verbindungsabschnitts wird in diesem Ausführungsbeispiel das Brustsegment 14 mit dem Schultersegment 12 und mit dem Hauptsegment 11 mittels einiger der Gurtbänder der Gurtsystems zusammen mit den Schnallen 71 beweglich verbunden. Schließlich weist die Schutzkleidung weiterhin eine Befestigungsplatte 77 auf, welche mit den Gurtsystem mechanisch direkt verbunden, insbesondere vernietet und verklebt ist.

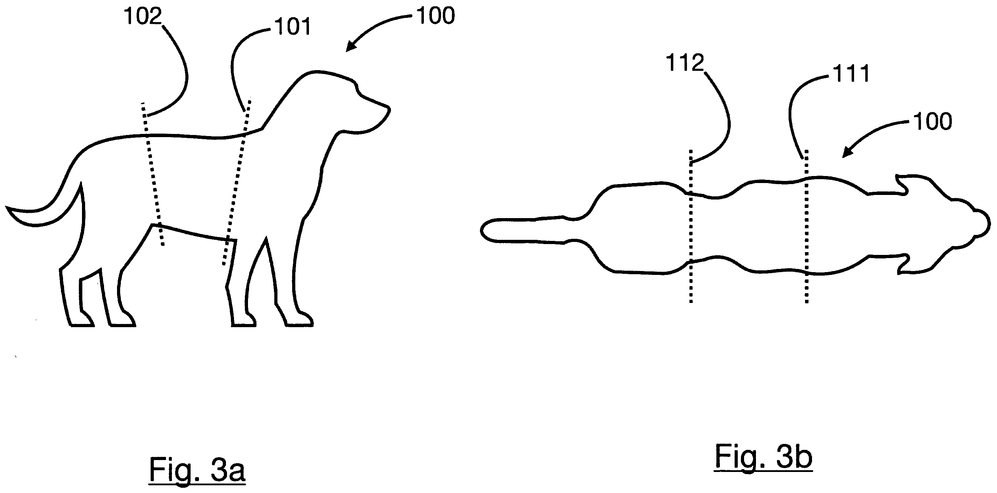

Fig. 3a zeigt eine seitliche Ansicht eines Hunds 100 zusammen mit einer ersten und einer zweiten natürlichen Biegelinie 101 und 102 des Hunds bei seinem Rumpf. Dabei verläuft die Biegelinie 101 im Wesentlichen zwischen Thorax und Abdomen des Hunds 100. Die Biegelinie 102 verläuft im Wesentlichen zwischen Abdomen und Becken oder Hinterläufen des Hunds 100. Dabei beziehen sich die Biegelinien 101 und 102 auf eine seitliche Biegung des Hunds. Es versteht sich, dass der Hund weitere natürliche Biegelinien hat, etwa am Hals.

Fig. 3b zeigt eine Ansicht eines Hunds 100 von oben zusammen mit einer ersten und einer zweiten natürlichen Beugelinie 111 und 112 des Hunds bei seinem Rumpf. Die Beugelinie 111 verläuft etwa an der Position der Biegelinie 101, wobei die Beugelinie sich auf eine Beugung des Hunds nach oben und unten bezieht. Entsprechendes gilt für die Beugelinie 112, welche etwa an der Position der Biegelinie 102 verläuft. Es versteht sich, dass der Hund weitere natürliche Beugelinien hat, etwa am Hals.

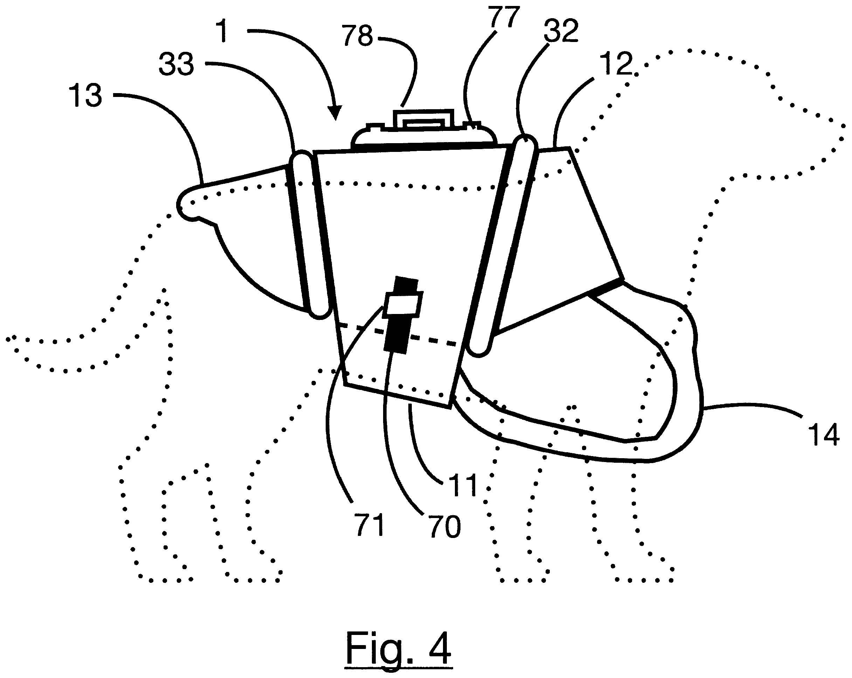

Fig. 4 zeigt die Schutzkleidung 1 aus Fig. 2 im angelegten Zustand, wobei das Gurtsystem 70 geschlossen ist. Zur Verdeutlichung ist der Hund als gepunktete Silhouette dargestellt; er ist jedoch kein Teil der Ausführungsform oder der Schutzkleidung.

In einem Ausführungsbeispiel der Schutzweste 1 weist diese zudem einen Griff 78 auf, welcher an der Befestigungsplatte 77 lösbar befestigt ist. Im angelegten Zustand umschließt das Hauptsegment 11 einen Bereich beim Thorax und Abdomen des Hundes röhrenförmig, wobei es sich in Richtung des Schwanzes des Hunds verjüngt.

Insbesondere kann zum Anlegen der Schutzkleidung 1 diese zunächst auf den Rücken des Hunds gelegt werden. Dann kann die rechte Seite des Hauptsegments 11 seitlich rechts beim Thorax des Hunds herabgelassen werden und anschließend die linke Seite des Hauptsegments links beim Thorax herabgelassen, unterhalb des Thorax durchgeführt und auf die rechte Seite des Hauptsegments gelegt werden. Anschließend werden die Gurtbänder, welche aus der rechten bzw. linken Seite des Hauptsegments 11 hervortreten mittels einer der Schnallen 71 verbunden. Bei Varianten, bei welchen die linke und die rechte Seite des Hauptsegments im angelegten Zustand überlappen, ist somit ein Bereich beim Thorax und Abdomen des Hunds vollständig röhrenförmig umschlossen. Umgekehrt bleibt bei Varianten ohne Überlappung ein Schlitz bestehen, sodass dieser Bereich lediglich im Wesentlichen röhrenförmig umschlossen ist. In Varianten mit Brustsegment 14 wird dieses dann mittels der Schnallen 71 am Schultersegment 12 befestigt, sodass die miteinander verbundenen Brust- und Schultersegmente den Hals umschließen. Schließlich wird das noch lose Ende des Brustsegments zwischen den Vorderläufen des Hunds hindurchgeführt und die dortigen Gurtbänder mittels Schnallen 71 miteinander verbunden.

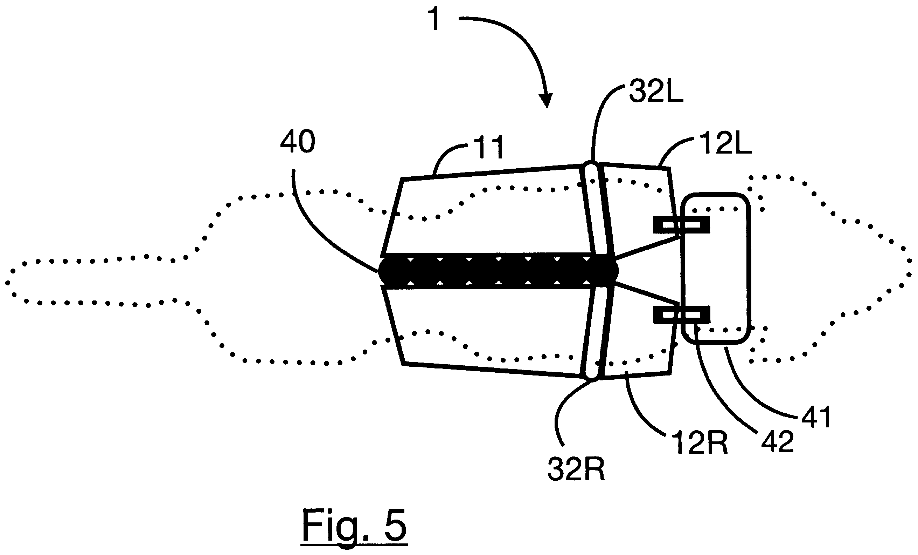

Fig. 5 zeigt schematisch eine Ansicht von oben auf eine Schutzkleidung 1 für einen Hund in einem angelegten Zustand nach einer weiteren alternativen Ausführungsform der vorliegenden Erfindung, insbesondere mit einem vereinfachtem Aufbau. Zur Verdeutlichung ist der Hund als gepunktete Silhouette dargestellt; er ist jedoch kein Teil der Ausführungsform oder der Schutzkleidung.

In einem Ausführungsbeispiel weist die Schutzkleidung 1 mehrere Segmente, also insbesondere ein Hauptsegment 11, ein linkes Schultersegment 12L und ein rechtes Schultersegment 12R auf, wobei die beiden Schultersegmente 12L und 12R voneinander getrennt sind und mit dem Hauptsegment 11 je mittels eines Verbindungsabschnitts 32L bzw. 32R beweglich verbunden sind. Das Schutzmaterial ist in das Hauptsegment 11 und in die Schultersegmente 12L und 12R eingearbeitet. Das Hauptsegment 11 umschließt im angelegten Zustand den Bereich beim Thorax und Abdomen nicht vollständig röhrenförmig, sondern hat oben im Bereich der Wirbelsäule einen Schlitz 40 mit elastischem Material. Außerdem weist die Schutzweste 1 eine Halskrause 41 auf und zwei Verschlusselemente 42, etwa Klettverschluss, zum beweglichen Verbinden der Halskrause 41 mit den Schultersegmenten 12L und 12R auf. Auch in die Halskrause 41 kann das Schutzmaterial eingearbeitet sein. Auch versteht es sich, dass der Schlitz 40 und das elastische Material in einigen Varianten an einem anderen Bereich beim Hauptsegment 11 angeordnet sein kann, insbesondere einem anderen Bereich, welcher sich entlang des Hauptsegments in einer Richtung vom Thorax zum Abdomen erstreckt.

Insbesondere kann zum Anlegen der Schutzkleidung 1 der Hund zunächst mit seinen Hinterläufen von den Schultersegmenten 12L und 12R aus durch das Hauptsegment 11 steigen, wobei der Schlitz 40 gedehnt wird und die nötige Flexibilität und Weite der Schutzkleidung beim Hauptsegment ermöglicht. Anschließend kann die Halskrause 41 über den Kopf des Hunds zu seinem Hals geschoben werden. Schließlich werden die Halskrause 41 und die Schultersegmente 12L und 12R mittels der Verschlusselemente 42 verbunden. Auf diese Weise verhindert das Hauptsegment 11 ein Verrutschen der Schutzkleidung 1 nach vorne und die Halskrause 42 ein Verrutschen nach hinten.

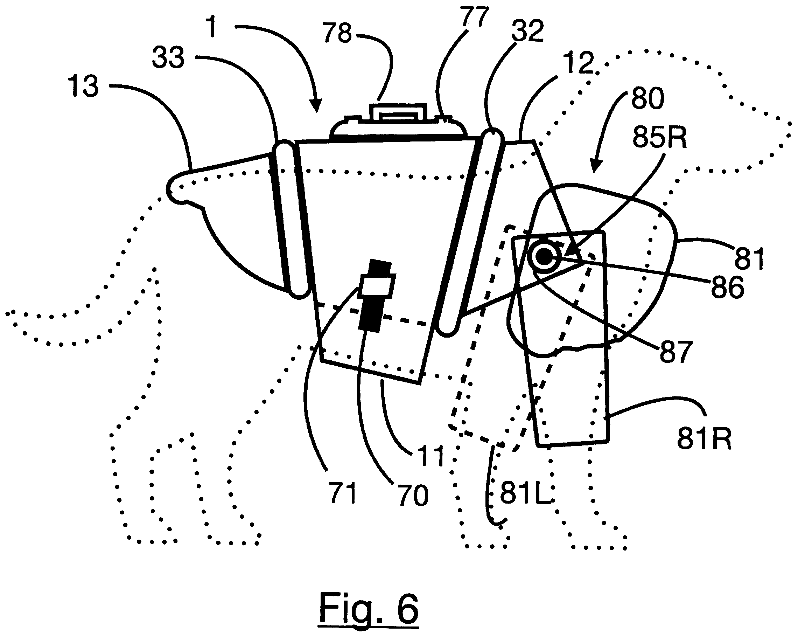

Fig. 6 zeigt schematisch eine Ansicht einer Schutzkleidung 1 für einen Hund in einem angelegten Zustand nach einer Ausführungsform der vorliegenden Erfindung, wobei der Hund zur Verdeutlichung als gepunktete Silhouette dargestellt ist und die Ansicht eine Ansicht auf die rechte Seite des Hunds zeigt; der Hund ist jedoch kein Teil der Ausführungsform oder der Schutzkleidung.

Soweit in Fig. 1 oder Fig. 4 dargestellte Bezugszeichen auch in Fig. 6 verwendet werden, bezeichnen sie dieselben Elemente oder Bauteile. Insbesondere weist die Schutzkleidung 1 ein Hauptsegment 11, ein Schultersegment 12 und ein Lendensegment 13 auf, die über Verbindungsabschnitte 32 und 33 beweglich miteinander verbunden sind. Auch ist ein Gurtsystem 70 mit Gurtbändern und einem Verschlussmechanismus 71 dargestellt.

Im Unterschied zur Ausführungsform gemäß Fig. 4 weist die in Fig. 6 dargestellte Schutzkleidung 1 kein Brustsegment 14 auf, sondern einen Frontschutz 80. In weiteren Varianten kann eine solche Ausführungsform zusätzlich ein Brustsegment aufweisen.

Der Frontschutz 80 weist in der dargestellten Ausführungsform drei Schutzmodule 81, 81R und 81L auf.

Das Hals-/Brust-Schutzmodul 81 ist im Bereich zwischen den Vorderläufen des Hunds angeordnet und bedeckt im angelegten Zustand zumindest im Wesentlichen die frontalen und ventralen Anteile des Halses und der Brust des Hunds. In der dargestellten Ausführungsform ist das Schutzmodul 81 als vorgeformte, weitgehend formstabile Platte ausgebildet. Die Platte weist eine anatomisch angepasste Krümmung auf, sodass sie sich im angelegten Zustand eng an die Körperform des Hunds anschmiegt. Das Schutzmodul 81 weist in einigen Varianten eine Mehrlagenstruktur mit einer äußeren Hülle aus abriebfestem Textilmaterial sowie einem integrierten Schutzpaket auf. Das Schutzpaket oder in alternativen Varianten das Schutzmodul 81 selbst kann insbesondere eine keramische oder metallische Schutzplatte oder aus Kunststoff, insbesondere aus Polycarbonat oder UHMW-PE (Ultra High Molecular Weight Polyethylene), aufweisen. In weiteren Varianten ist das Schutzmodul 81 zusätzlich oder alternativ stoffschlüssig aus mehreren festen Lagen aufgebaut, die durch Kleben oder Verschmelzen miteinander verbunden sind.

Das rechte und das linke Vorderlauf-Schutzmodul 81R und 81L sind jeweils entlang der Innenseite des zugeordneten Vorderlaufs angeordnet und folgen dabei dem Verlauf des jeweiligen Vorderlaufs bis zumindest in den Bereich oberhalb des Ellenbogengelenks. Die Schutzmodule 81R und 81L sind jeweils als flexible textile Schutzmodule ausgebildet. Das linke Vorderlauf-Schutzmodul 81L ist in Fig. 6 gestrichelt dargestellt, da es sich auf der abgewandten Seite der Ansicht befindet.

Die Schutzmodule 81R, 81L weisen in einigen Varianten ein mehrlagiges Material auf, das insbesondere eine Kombination aus schnitt- oder stichhemmenden Textillagen, etwa aus Aramidgewebe oder hochmolekularem Polyethylen, aufweist. In einigen Varianten umfasst das Material zusätzlich eine polsternde Zwischenlage aus Schaumstoff oder ein schlagschutzwirksames Material, wie Polyethylen- oder Polyurethanschaum, oder eine nicht-newtonsche Flüssigkeit in einem gekapselten Textilverbund. In weiteren Varianten sind die Schutzmodule stoffschlüssig aus mehreren Lagen aufgebaut und in der Form konturiert vernäht oder thermogeformt.

Die Schutzmodule sind verformbar ausgeführt, wodurch sie insbesondere sich beim Anlegen um den jeweiligen Vorderlauf anschmiegen und dessen Beweglichkeit im Wesentlichen nicht einschränken.

Das Hals-/Brust-Schutzmodul 81 ist über eine Drehverbindung 85R im Bereich des rechten Schultergelenks des Hunds mit der Schutzkleidung 1 verbunden. Die Drehverbindung 85R weist eine an der Schutzkleidung befestigte Drehverbindungsbasis 86 sowie ein mit dem Schutzmodul 81 verbundenes Drehverbindungselement 87 auf. Die Drehverbindungsbasis 86 ist im dargestellten Ausführungsbeispiel an einem Abschnitt des Gurtsystems 70 mechanisch befestigt, insbesondere an einer Gurtsystemverbindungsstelle. Die Drehverbindung 85R ist derart ausgebildet und angeordnet, dass die Drehachse zumindest im Wesentlichen entlang einer natürlichen Beugelinie des Hunds im Bereich des rechten Schultergelenks verläuft.

Das Drehverbindungselement 87 ist mit dem Schutzmodul 81 starr verbunden, etwa durch Vernieten oder stoffschlüssige Verbindung, und greift drehbar und lösbar in die zugeordnete Drehverbindungsbasis 86 ein. Eine entsprechende Drehverbindung für die linke Seite mit Drehverbindungsbasis und Drehverbindungselement weist weist die Ausführungsform ebenfalls auf; diese ist jedoch in der dargestellten Ansicht nicht sichtbar, da sie sich auf der vom Betrachter abgewandten linken Seite des Hunds befindet.

In einer Variante ist die Drehverbindung 85R durch zwei zueinander koaxial angeordnete Scheiben realisiert, von denen eine der Drehverbindungsbasis 86 und die andere dem Drehverbindungselement 87 zugeordnet ist. Dabei sind die Scheiben über ein magnetisches Verbindungssystem drehbar und lösbar miteinander verbunden, sodass eine mechanisch einfache, gleichzeitig aber strukturstabile Kopplung mit definiertem Widerstand gegen unbeabsichtigtes Lösen erreicht wird.

Während Ausführungsbeispiele, Anwendungsmöglichkeiten und Anwendungsbeispiele insbesondere unter Bezugnahme auf die Figuren detailliert beschrieben wurden, sei darauf hingewiesen, dass eine Vielzahl von Abwandlungen möglich ist. Außerdem sei darauf hingewiesen, dass es sich bei den exemplarischen Ausführungen und Anwendungen lediglich um Beispiele handelt, die den Schutzbereich, die Anwendung und den Aufbau in keiner Weise einschränken sollen. Vielmehr wird dem Fachmann
durch die vorausgehende Beschreibung ein Leitfaden für die Umsetzung und/oder Anwendung von mindestens einem Ausführungsbeispiel gegeben, wobei diverse Abwandlungen, insbesondere alternative oder zusätzliche Merkmale und/oder Abwandlungen der Funktion und/oder Anordnungen der beschriebenen Bestandteile, nach Wunsch des Fachmanns vorgenommen werden können, ohne dass dabei von dem in den angehängten Ansprüchen jeweils festgelegten Gegenstand sowie seiner rechtlichen Äquivalente abgewichen wird und/ oder deren Schutzbereich verlassen wird.

## Patentansprüche

1. Schutzkleidung (1) für einen Hund mit
mehreren Segmenten (11, 12, 13, 14) zum Schutz des Rumpfbereichs des Hunds mittels Schutzmaterials,
wobei die Segmente zumindest paarweise beweglich miteinander verbunden sind,
wobei die Segmente ausgebildet sind, in einem angelegten Zustand der Schutzkleidung (1) je einen Teil des Rumpfbereichs zwischen den Vorderläufen und den Hinterläufen des Hundes zu bedecken,
und wobei eines der Segmente, als Hauptsegment (11) bezeichnet, ausgebildet ist, im angelegten Zustand einen Bereich beim Thorax und Abdomen des Hunds röhrenförmig zumindest im Wesentlichen zu umschließen.

2. Schutzkleidung (1) gemäß Anspruch 1,
wobei ein weiteres der Segmente, als Schultersegment (12) bezeichnet, ausgebildet ist, einen Abschnitt des Rumpfbereichs zwischen den Vorderläufen des Hunds und dem Hauptsegment U-förmig zu bedecken bzw. röhrenförmig zu umschließen,
wobei noch ein weiteres der Segmente, als Lendensegment (13) bezeichnet, ausgebildet ist, einen Abschnitt des Rumpfbereichs von den Hinterläufen des Hunds zu dem Hauptsegment U-förmig zu bedecken bzw. röhrenförmig zu umschließen,
wobei die Schutzkleidung (1) zwischen den Segmenten (11, 12, 13) jeweils einen Verbindungsabschnitt (32, 33) aus textilem Material zum beweglichen Verbinden von je zumindest zwei der Segmente aufweist, welcher im angelegten Zustand entlang je einer natürlichen Biege- und Beugelinie des Hunds verläuft; und
wobei die Schutzkleidung (1) weiterhin ein Gurtsystem (70) mit mehreren Gurtbändern aufweist,
wobei das Gurtsystem zur Befestigung am Hund ausgebildet ist und einen Verschlussmechanismus (71) aufweist, und
wobei die Gurtbänder zumindest im Wesentlichen zwischen einer Innenseite und einer Außenseite der Schutzkleidung (1) verlaufen und zumindest teilweise mit den Segmenten (11, 12, 13, 14) und/oder Verbindungsabschnitten (32, 33) vernäht sind sowie an jenen Stellen zur Außenseite treten, an welchen die Gurtbänder mittels des Verschlussmechanismus (71) zum Schließen der Schutzkleidung und zur Befestigung am Hund verbindbar sind.

3. Schutzkleidung (1) gemäß Anspruch 2, weiterhin mit einer Befestigungsplatte (77) bei dem Hauptsegment (11) im Bereich der Wirbelsäule des Hunds,
wobei die Befestigungsplatte (77) zur lösbaren Befestigung eines Griffs (78) an ihr ausgebildet ist und mit dem Gurtsystem (70) vernäht ist.

4. Schutzkleidung (1) gemäß Anspruch 2 oder 3, wobei die Schutzkleidung (1) zusätzliches in die Schutzweste eingearbeitetes Schutzmaterial (52, 53) oder innenliegende Taschen für Schutzpakete aus Schutzmaterial bei dem jeweiligen Verbindungsabschnitt (32, 33) aufweist.

5. Schutzkleidung (1) gemäß einem der vorhergehenden Ansprüche, welche weiterhin eine Messeinrichtung (60) zum Messen der Feuchtigkeit und Temperatur beim Hund aufweist.

6. Schutzkleidung (1) gemäß einem der vorhergehenden Ansprüche, weiterhin mit einem Kühlungsmaterial, das im angelegten Zustand relativ zu den Segmenten (11, 12, 13, 14) innenliegend angeordnet ist, sowie mit einer Polsterung (52, 53), welche derartig innenliegend angeordnet ist, dass das Hauptsegment (11) vom Thorax und/oder Abdomen des Hunds beabstandet ist.

7. Schutzkleidung (1) gemäß einem der vorhergehenden Ansprüche, wobei die Segmente (11, 12, 13, 14) je eine Tasche (21, 22, 23) zur Aufnahme von einem Schutzpaket mit Schutzmaterial aufweisen.

8. Schutzkleidung (1) gemäß einem der Ansprüche 1 bis 6, wobei das Schutzmaterial jeweils in die Segmente (12L, 12R) eingearbeitet ist.

9. Schutzkleidung (1) gemäß einem der vorhergehenden Ansprüche und aufweisend das Schutzmaterial, wobei das Schutzmaterial ausgewählt ist aus einer Gruppe von:
- Ballistischem Material, insbesondere Gewebe oder Gewirke aus Aramiden oder hochmolekularen Polyethylenen oder Platten bzw. Folien aus Keramik oder Titan;
- Stichschutzmaterial, insbesondere entsprechend dem ballistischem Material oder Platten bzw. Folien aus Aluminium oder einem Kettenringgeflecht;
- Schnittschutzmaterial, insbesondere entsprechend dem Stichschutzmaterial;
- Schlagschutzmaterial, insbesondere entsprechend dem ballistischem Material, Aluminiumplatten, Platten aus Kunststoffen wie Polycarbonat oder nicht-newtonsche Flüssigkeiten;
oder eine, insbesondere mehrlagige, Kombination daraus.

10. Schutzkleidung (1) gemäß einem der vorhergehenden Ansprüche, die weiterhin einen Frontschutz (80) mit mindestens einem Schutzmodul (81, 81R, 81L) zum Schutz eines oder mehrerer vorderer Bereiche des Hunds aufweist,
wobei der Frontschutz (80) mittels jeweils einer Drehverbindung (85R) je im Bereich eines der beiden Schultergelenke des Hunds mit der Schutzkleidung (1) verbunden ist,
wobei zumindest eine der Drehverbindungen (85R) eine Drehverbindungsbasis (86), die an der Schutzkleidung (1) im Bereich des jeweiligen Schultergelenks befestigt ist, und ein Drehverbindungselement (87), das mit dem Frontschutz (80) verbunden ist, aufweist, wobei die Drehverbindungsbasis und das Drehverbindungselement miteinander drehbar und voneinander lösbar verbunden sind, und wobei die Drehachse der Drehverbindungen zumindest im Wesentlichen entlang einer natürlichen Beugelinie des Hundes im Bereich der Schultergelenke verläuft.

11. Frontschutz (80) für eine Schutzkleidung für einen Hund, aufweisend:
- mindestens ein Schutzmodul (81) zum Schutz eines oder mehrerer vorderer Bereiche des Hunds; und
- je ein Drehverbindungselement, das mit dem Schutzmodul (81) verbunden ist und jeweils für eine Anordnung im Bereich eines der beiden Schulterbereiche des Hunds vorgesehen ist,
wobei jedes Drehverbindungselement eingerichtet ist, mit einer jeweiligen Drehverbindungsbasis eine Drehverbindung derart auszubilden, dass das jeweilige Drehverbindungselement und die jeweilige Drehverbindungsbasis drehbar und voneinander lösbar miteinander verbunden sind.

12. Nachrüstsatz für eine Schutzkleidung für einen Hund, aufweisend:
- einen Frontschutz (80) gemäß Anspruch 11; und
- für jede der Drehverbindungen des Frontschutzes (80) je ein Befestigungselement mit einer Drehverbindungsbasis, und
wobei jedes Befestigungselement ausgebildet ist, an der Schutzkleidung im Bereich eines Schulterbereichs befestigt zu werden.

13. Gurtsystem (70) für eine Schutzkleidung (1) gemäß einem der Ansprüche 1 bis 10, mit mehreren Gurtbändern,
wobei das Gurtsystem (70) zur Befestigung durch Anlegen am Hund ausgebildet ist und einen Verschlussmechanismus (71) aufweist,
wobei das Gurtsystem (70) mehrere Gurtsystemverbindungsstellen zur modularen Verbindung des Gurtsystems (70) mit Segmenten (11, 12, 13, 14) und/oder Verbindungsabschnitten (32, 33) der Schutzkleidung (1) aufweist,
wobei die Gurtsystemverbindungsstellen derart angeordnet und ausgebildet sind, dass bei Befestigung der Segmente (11, 12, 13, 14) und/oder der Verbindungsabschnitte (32, 33) zumindest jene Verbindungsabschnitte, welche die Segmente beweglich miteinander verbinden, entlang natürlicher Biege- und/oder Beugelinien des Hunds verlaufen.

14. Verfahren zur Herstellung einer Schutzkleidung für einen Hund, aufweisend die Schritte:
- Bereitstellen mehrerer Segmente (11, 12, 13, 14), die Schutzmaterial aufweisen oder zur Aufnahme von Schutzmaterial ausgebildet sind, wobei eines der Segmente als Hauptsegment (11) ausgebildet ist, im angelegten Zustand der Schutzkleidung einen Bereich beim Thorax und Abdomen des Hunds zumindest im Wesentlichen röhrenförmig zu umschließen; und
- Ausbilden eines oder mehrerer Verbindungsabschnitte (32, 33) aus textilem Material zwischen zumindest zwei der Segmente, wobei die Verbindungsabschnitte zum beweglichen Verbinden der Segmente eingerichtet sind,
- wobei die Verbindungsabschnitte in einer Weise angeordnet und ausgebildet sind, dass sie im angelegten Zustand der Schutzkleidung (1) entlang natürlicher Biege- und/oder Beugelinien eines Hunds verlaufen.

15. Verwendung einer Schutzkleidung (1) gemäß einem der Ansprüche 1 bis 10 oder hergestellt gemäß Anspruch 14 zum Schutz eines Hunds bei einem Einsatz, mit den Schritten:
- Bereitstellen der Schutzkleidung (1); und
- Anlegen der Schutzkleidung (1) an den Hund;
wobei beim Anlegen die Schutzkleidung (1) relativ zum Hund positioniert wird, sodass Segmente (11, 12, 13, 14) der Schutzkleidung (1) je einen Teil des Rumpfbereichs zwischen den Vorderläufen und den Hinterläufen des Hunds bedecken und deren bewegliche Verbindungen entlang natürlicher Biege- und/oder Beugelinien des Hunds verlaufen, wobei ein Hauptsegment (11) der Schutzkleidung (1) im Bereich von Thorax und Abdomen des Hunds angeordnet ist und diesen zumindest im Wesentlichen röhrenförmig umschließt.
